# EUROPEAN PATENT APPLICATION

(11) **EP 4 814 555 A1**
(43) Date of publication of application: **30.09.2026**
(21) Application number: 24894482.9
(22) Date of filing: 08.11.2024
(51) Int. Cl.: G02B 9/34, G01S 7/481, G02B 13/00, G02B 13/16, B60W 40/02, G02B 3/00

(54) **TRANSMISSION OPTICAL SYSTEM, SENSOR SYSTEM, AND LIDAR DEVICE**

(30) Priority: 21.11.2023 KR 20230162321
(71) Applicant: LG Innotek Co., Ltd., Seoul 07796 (KR)
(72) Inventor: PARK, Chan Young, Seoul 07796 (KR); KIM, Se Young, Seoul 07796 (KR)
(74) Representative: Plasseraud IP
(86) International application number: PCT/KR2024/017697
(87) International publication number: WO 2025/110589

(57) **Abstract**

An optical system disclosed in an embodiment of the invention includes first to fourth lenses arranged in sequence along an optical axis from an object toward a light source, wherein the first lens has an object-side surface having a convex shape on the optical axis and has positive power, the second lens has a meniscus shape convex on the optical axis toward the object, the third lens has negative power, the fourth lens has positive power, a center distance between the second and third lenses is the maximum among center distances between adjacent two lenses, and a light-source-side surface of the third lens has a concave shape on the optical axis and may be the minimum among absolute values of curvature radii of the object-side surfaces and light-source-side surfaces of the first to fourth lenses.

## Description

### Technical Field

An embodiment relates to an optical system and a sensor system having the same. The embodiment relates to an optical system for LIDAR (Light detection and ranging) and a device having the same. The embodiment of the invention relates to a moving body having a transmission optical system and system for LIDAR.

### Background Art

ADAS (Advanced driving assistance system) is an advanced driver assistance system that assists the driver in driving. It consists of sensing the situation ahead, judging the situation based on the sensed results, and controlling the vehicle's behavior based on the situation judgment. For example, the ADAS sensor device detects the vehicle ahead and recognizes the lane. Afterwards, when the target lane, target speed, and target ahead are determined, the vehicle's ESC (Electrical stability control), EMS (Engine management system), and MDPS (Motor driven power steering) are controlled. Representative examples of ADAS include automatic parking systems, low-speed city driving assistance systems, and blind spot warning systems.

Recently, as interest in autonomous vehicles has increased, demand for LIDAR (Light detection and ranging) sensors, which are its core components, is increasing. Currently, LIDAR is only used for high-spec, expensive vehicles, but it is expected to be applied to general vehicles as well due to reduced manufacturing costs.

Ultra-small and ultra-light LIDAR technology may be used not only as a sensor for unmanned mobile devices, but also in satellites and aerospace for observing the Earth's topography and environment, unmanned vehicles, transporters, cranes, and robots used in factories and shipyards, and is expected to emerge as a complex or cooperative operation between mobile devices through an integrated approach in the land, aviation, and marine industries, and as a result, it is urgent to develop an optical system for ultra-small and ultra-light LIDAR to implement ultra-small and ultra-light LIDAR.

### Disclosure

### Technical Problem

An embodiment provides an optical system having improved optical characteristics and a sensor system having the same. The embodiment provides a wide-angle optical system and a sensor system having the same. The embodiment provides a transmission optical system, a sensor system, and a LIDAR device having improved thermal compensation characteristics.

### Technical Solution

An optical system according to an embodiment of the invention includes first to fourth lenses sequentially arranged along an optical axis from an object toward a light source, wherein the first lens has a shape in which an object-side surface is convex on an optical axis and has positive power, the second lens has a meniscus shape convex on the optical axis toward the object, the third lens has negative power, and the fourth lens has positive positive power, and a center distance between the second and third lenses is a maximum among center distances between adjacent two lenses, a light source-side surface of the third lens has a concave shape on the optical axis and may have a minimum curvature radius among absolute values of the curvature radii of object-side surfaces and light source-side surfaces of the first to fourth lenses.

According to an embodiment of the invention, an effective diameter of the third lens may be a minimum among effective diameters of the first to fourth lenses. An object-side surface of the third lens may have a convex shape on the optical axis. The fourth lens may have a biconvex shape on the optical axis.

According to an embodiment of the invention, a center distance between the first lens and the second lens may be a minimum among the center distances between adjacent lenses and may be less than 1 mm. The optical system may include a diffuser disposed on the object side of the first lens; and a light source disposed on the light source side of the fourth lens. The first to fourth lenses may be made of glass, and the fourth lens may have an aspherical shape. A field of view of the optical system is FOV, and an optical axis distance from the object-side surface of the first lens to a surface of the light source is TTL, and the following Equation satisfies: FOV < (TTL / n), where n may be a number of lenses.

According to an embodiment of the invention, an optical axis distance from the object-side surface of the first lens to a surface of the light source is TTL, and a refractive index of the first lens may be Nd1, and the following Equation may satisfy: 50 < TTL / Nd1 < 100. The maximum effective diameter among the object-side surfaces and the light source-side surfaces of the first to fourth lenses is CA_Max, a total focal length is F, and the following Equation may satisfy: 0 < CA_Max/F < 1. The effective diameter of the first lens may be the maximum among the effective diameters of the first to fourth lenses.

A transmission optical system according to an embodiment of the invention comprises: a diffuser adjacent to an object; a light source irradiating laser light; and first to fourth lenses sequentially arranged along an optical axis between the diffuser and the light source, wherein the first lens has a meniscus shape convex toward the object, the third lens has negative power, the fourth lens has a biconvex shape on the optical axis, each of the first and second lenses has an effective diameter larger than effective diameters of each of the third and fourth lenses, a center thickness of the first lens is CT1, a center thickness of the second lens is CT2, a center distance between the first and second lenses is CG1, and a center distance between the second and third lenses is CG2, and the following Equation may satisfy: 1 < CG2 / (CT1 + CG1 + CT2) < 3.

According to an embodiment of the invention, a center thickness of the third lens is CT3, a center thickness of the fourth lens is CT4, and the following Equation may satisfy: 1 < CG2 / (CT3 + CT4) < 4. A maximum of the center thicknesses of each of the first to fourth lenses is CT_Max, and a maximum of the center distances between the first to fourth lenses is CG_Max, and the following Equation may satisfy: 0.2 < CT_Max / CG_Max < 0.7.

According to an embodiment of the invention, the first to fourth lenses are made of glass, the first to third lenses have a spherical shape, and the fourth lens may have a positive power and an aspherical shape. The focal length of the optical system is F, and the optical axis distance from the light source-side surface of the fourth lens to the surface of the light source is BFL, and the following Equation may satisfy: 3 < F / BFL < 10.

According to an embodiment of the invention, 1/2 of a diagonal length of the light source is RsH, and the following Equation may satisfy: 1.5 < BFL / LsH < 2.5. A field of view of the optical system is FOV, and the optical axis distance from the object-side surface of the first lens to the surface of the light source is TTL, and the following Equation satisfies: 200 < (FOV*TTL)/n < 500, where n may be the number of lenses.

A LIDAR device according to an embodiment of the invention comprises a transmission optical system having a light source and first to fourth lenses aligned with a first optical axis from an object toward a light source; and a receiving optical system having an image sensor and fifth to ninth lenses aligned with a second optical axis from the object toward the image sensor, wherein at least one lens of the first to fourth lenses adjacent to the light source is an aspherical lens, and at least two of the fifth to ninth lenses are aspherical lenses, the receiving optical system includes an optical filter arranged between the spherical lenses, a number of aspherical lenses in the transmission optical system is smaller than a number of spherical lenses, a field of view of the transmission optical system is 15 degrees or less, a distance from the object-side surface of the first lens in the transmission optical system to the light source is more than 60 mm and less than 200 mm, and a focal length in the transmission optical system may be more than 50 mm and less than 300 mm.

According to an embodiment of the invention, the light source may generate light in a range of 890 nm to 960 nm, and the optical filter may be a bandpass filter that transmits light in a range of 890 nm to 960 nm. The first to fourth lenses and the fifth to ninth lenses may all be made of glass.

### Advantageous Effects

According to an embodiment, it can have improved optical characteristics. The LIDAR transmission optical system of the invention can maximize the extraction efficiency of light emitted from the transmission optical system.

The LIDAR transmission optical system of the invention can have good optical characteristics in a temperature range from low temperature to high temperature. In detail, a plurality of lenses included in the transmission optical system can have set materials, refractive power, and refractive index. Accordingly, when the refractive index of each lens changes according to the temperature change, and the focal length of each lens changes due to this, the glass mold lens and the glass lens can compensate each other. That is, the transmission optical system can effectively perform distribution of refractive power in a temperature range from low temperature to high temperature, and can prevent or minimize changes in optical characteristics in a temperature range from low temperature to high temperature. Therefore, the optical system and sensor system according to the embodiment can maintain improved optical characteristics in various temperature ranges.

The lenses of the LIDAR transmission optical system of the invention can have set thicknesses, refractive powers, and distances with adjacent lenses. Accordingly, the optical system and sensor system according to the embodiment can have improved MTF characteristics, aberration control characteristics, resolution characteristics, etc. in a set field of view range, and can have good optical performance in the periphery of the field of view.

The transmission optical system and sensor system according to the embodiment may satisfy the set field of view and implement excellent optical characteristics through a mixture of a glass mold lens and a glass lens. As a result, the optical system can provide a sensor system for a vehicle. Therefore, the optical system and sensor system may be provided for various applications and devices, and can have excellent optical characteristics even in a harsh temperature environment, for example, when exposed to the outside of a vehicle or inside a vehicle at a high temperature in the summer.

### Description of Drawings

FIG. 1 is a side cross-sectional view of the transmission optical system of the LIDAR according to the first embodiment.
FIG. 2 is a table showing the lens characteristics of the transmission optical system of FIG. 1.
FIG. 3 is a table showing the aspherical coefficient of the lens in the transmission optical system of FIG. 1.
FIG. 4 is a graph showing the data of the diffraction MTF (Modulation Transfer Function) in the transmission optical system of FIG. 1.
FIG. 5 is a side cross-sectional view of the transmission optical system of the LIDAR according to the second embodiment.
FIG. 6 is a table showing the lens characteristics of the transmission optical system of FIG. 5.
FIG. 7 is a table showing the aspherical coefficient of the lens in the transmission optical system of FIG. 5.
FIG. 8 is a graph showing the data of the diffraction MTF in the transmission optical system of FIG. 5.
FIG. 9 is data on the distortion characteristics of the transmission optical systems of FIGS. 1 and 5.
FIG. 10 is a block diagram showing a sensor system having the transmission optical systems of FIGS. 1 and 6.
FIG. 11 is a cross-sectional view showing the receiving optical system of the sensor system of FIG. 10.
FIG. 12 is a drawing showing an example of measuring an object in a vehicle having the sensor system of the invention.
FIG. 13 is a drawing showing an example of surrounding surveillance in a vehicle having the sensor system of the invention.

### Best Mode

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, "object-side surface" may refer to a surface of the lens facing the object side with respect to the optical axis OA, "sensor-side surface" may refer to a surface of the lens facing the imaging surface (image sensor) with respect to the optical axis, and "light source-side surface" may refer a surface of a lens facing the light source with respect to the optical axis. A convex surface of the lens may mean that the lens surface on the optical axis has a convex shape, and a concave surface of the lens may mean that the lens surface on the optical axis has a concave shape. A curvature radius, center thickness, and distance between lenses described in the table for lens data may mean values on the optical axis, and the unit is mm. The vertical direction may mean a direction perpendicular to the optical axis, and an end of the lens or the lens surface may mean the end or edge of the effective region of the lens through which the incident light passes. The effective diameter on the lens surface may have a measurement error of up to ±0.4 mm depending on the measurement method. The paraxial region refers to a very narrow region near the optical axis, and is a region in which a distance at which a light ray falls from the optical axis OA is almost zero. Hereinafter, the concave or convex shape of the lens surface will be described as an optical axis, and may also include a paraxial region.

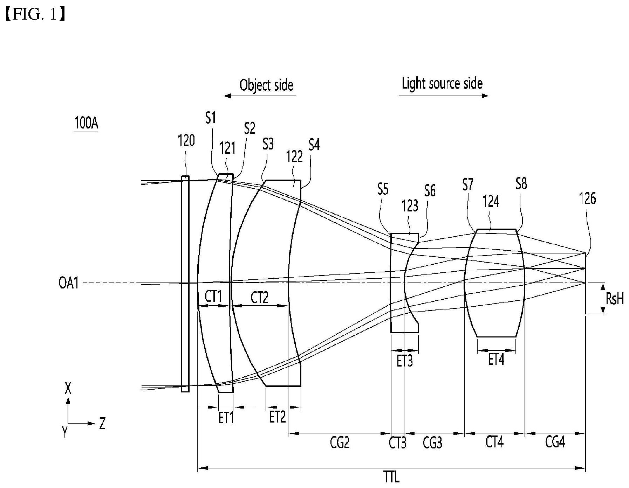

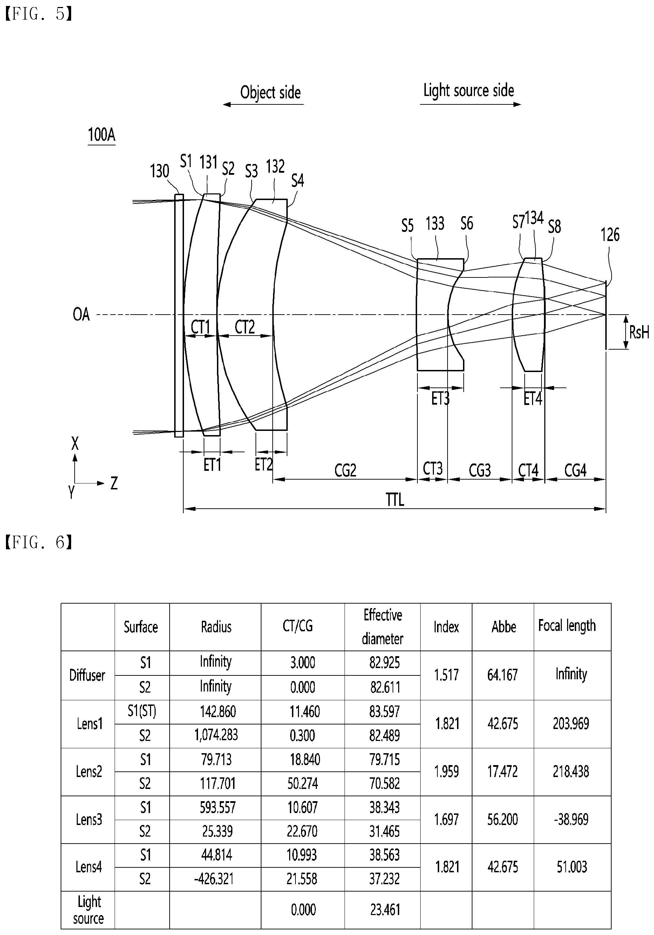

FIG. 1 and FIG. 5 are cross-sectional side views of the transmission optical system of the LIDAR according to the first and second embodiments.

Referring to FIG. 1 and FIG. 5, the transmission optical system 100A and the sensor system having it may be mounted inside or outside the vehicle to monitor the driver or sense external objects or lanes. The transmission optical system 100A includes a plurality of lenses, and a material of each of the plurality of lenses may be selected from glass or plastic. A coefficient of linear expansion of the lens is smaller for glass than for plastic, and the lens made of glass can suppress the change in the focal imaging position due to temperature change. However, when the glass lenses are composed of spherical lenses, there is a limit to reducing the number of lenses, and there is a limit to reducing the size and weight.

The transmission optical system 100A of the embodiment of the invention can include a spherical lens and an aspherical lens. Here, the spherical lens is a lens in which at least one of the object side-surface and the light source side-surface of the lens on the optical axis is spherical. The aspherical lens is a lens in which at least one of the object-side and light source-side surfaces of the lens on the optical axis is aspherical. The object-side surface is an exit-side surface of each lens or the surface close to the object, and the light source-side surface is an incident-side surface of each lens or the surface close to the light source.

The transmission optical system 100A may include a spherical glass lens and an aspherical glass lens. In addition, when at least one aspherical lens is included among the lenses, the optical system 100A may have a reduced overall length (TTL), and various aberrations such as spherical aberration and chromatic aberration may be well corrected due to the aspherical lens. In addition, the aspherical lens may minimize distortion in the peripheral portion of the effective region.

The optical system 100A may include n lenses, and the n-th lens may be the last lens adjacent to the light source 126, and the n-1th lens may be the lens closest to the last lens. The n is an integer less than or equal to 5, and may be, for example, in the range of 3 to 5. The ratio of the spherical lens and the aspherical lens in the n lenses may be 3:1 or 2:2.

The first lens 121 and 131 closest to the object in the transmission optical system 100A may be made of a glass lens. The first lens 121 and 131 has a small amount of expansion and contraction change due to external temperature change, and its surface is not easily scratched, so that surface damage may be prevented. Accordingly, the lenses adjacent to the object in the optical system 100A may be spherical lenses, and the lens(es) adjacent to the light source side may be aspherical lenses to control the path of the emitted light.

In the optical system 100A, at least one lens close to the light source 126 may be an aspherical lens. For example, the n-th lens may be an aspherical lens, and the n-th aspherical lens may refract the light from the light source 126 into various paths. The aspherical lens may be a glass mold in which a glass material is injection-molded. As another example, at least two lenses closest to the light source 126 may be aspherical lenses.

The lenses in the optical system 100A may be made of glass. Since the rate of change in contraction and expansion due to temperature change of the lenses made of glass is smaller than that of the lenses made of plastic, a phenomenon of the center axis of the lenses tilting in the lens barrel may be suppressed.

The number of aspherical lenses in the optical system 100A may be smaller than that of the spherical lenses. The lenses in the optical system may be made of glass, the spherical lenses may be made of glass, and the aspherical lenses may be made of glass mold.

The lens with the maximum effective diameter in the optical system 100A is located closest to the aperture stop ST or the object, may be made of glass, and may be a spherical lens. The lens with the minimum effective diameter in the optical system 100A is located closest to the aspherical lens, and may be a glass lens. The lens with the minimum effective diameter may be disposed between the spherical lens and the aspherical lens. The effective diameter of the aspherical lens may be smaller than the average effective diameter of the spherical lenses. Here, the effective diameter of each lens is the average value of the effective diameter of the object-side surface of each lens and the effective diameter of the light source-side surface.

Each of the lenses 121 to 124 may include an effective region and an ineffective region. The effective region may be a region through which light incident on each of the lenses passes. That is, the effective region may be defined as an effective region or effective diameter where the incident light is refracted to implement optical characteristics. The ineffective region may be arranged around the effective region. The ineffective region may be a region where effective light is not incident from the plurality of lenses. That is, the ineffective region may be a region unrelated to the optical characteristics. In addition, the end of the ineffective region may be a region fixed to a lens barrel (not shown) that accommodates the lens.

The maximum of the center thicknesses of the lenses may be greater than the maximum of the edge thicknesses of the lenses. The maximum center thickness of the lenses may be less than the maximum value of the center distances between adjacent two lenses.

In the optical system 100A, the TTL (Total top length) may be more than 5 times the LsH, for example, more than 5 times and less than 15 times. The TTL is a distance from the center of the object-side surface of the first lens 121 and 131 to the surface of the light source 126 on the optical axis OA1. The LsH is a distance from the center of the light source 126 to the diagonal end or 1/2 of the maximum diagonal length of the light source 126. In addition, the effective diameter of each lens within the optical system 100A may be greater than the diagonal length of the light source 126.

Within the optical system 100A, the effective focal length (EFL) is provided to be greater than 50 mm and the field of view (FOV) is provided to be less than 30 degrees, so that it may be provided as a standard transmission optical system in a vehicle sensor system. For example, the transmission optical system and the sensor system according to the embodiment may be applied to a sensing device for an ADAS (Advanced driving assistance system) installed inside or outside a vehicle. The optical system 100A may be applied to a LIDAR transmission system.

The optical system 100A may have a condition of TTL/(2*LsH) of more than 2.5 times and less than 10 times. Accordingly, the center thickness of each lens along the optical axis OA1 may be increased and the size of the light source 126 may be reduced, thereby providing a vehicle lens optical system. In addition, in order to be used in a vehicle camera, temperature compensation must be applied in a temperature range that serves as a temperature reliability evaluation criterion for automotive electrical components, that is, from -40°C to 120°C. That is, the lens must be configured so that the focus of the lens is maintained within the set range even when the lens expands or contracts due to a change in temperature. The total effective focal length (F) may be more than 50 mm, for example, in the range: 50 mm < F < 200 mm, and may be configured with lenses made of glass that enable the aforementioned temperature compensation. The transmission optical system 100A may provide an effective focal length greater than the effective focal length of the receiving optical system to implement a narrow angle.

The light source 126 generates a laser beam, and the wavelength of the laser beam may be in the range of 800 nm to 1000 nm, for example, in the range of 890 nm to 960 nm or 940 nm ±10 nm. As another example, the wavelength of the laser beam may be 1550 nm ±10 nm. The light source 126 may be implemented as a semiconductor diode laser based on a compound semiconductor, for example, InGaAs/GaAs, and may emit high power laser light. The light source 126 may include a single emitter and/or multiple emitters. The light source 126 generates laser light in the form of a line light source or a point light source.

The number of lenses having positive (+) refractive power on the optical system 100A may be 2 or more, and the number of lenses having negative (-) refractive power may be 2 or less. The powers of the first lens 121 and 131 and the last lens can both have positive values. In the optical system 100A, a lens having a minimum curvature radius among the object-side and light-source-side surfaces of the lenses can have negative power. In the optical system 100A, a lens having a minimum center thickness of the lenses can have negative power. In the optical system 100A, a lens having a minimum effective diameter of the lenses can have negative power. In the optical system 100A, a center distance between a lens having negative power and another lens may be larger than the center thickness of the lens having negative power.

The lens having negative power may be arranged on the object side rather than the aspherical lens. The lens having negative power may be a spherical lens. Since the optical system 100A is a mixture of a spherical lens and an aspherical lens made of glass, optical performance degradation may be prevented. In addition, the average of the center thicknesses of the lenses in the optical system 100A may be provided to be 5 mm or more, so that they may be provided as lenses with strong heat resistance. The effective diameter of the first lens 121 and 131 closest to the object side in the optical system 100A may be larger than the effective diameter of the last lens closest to the light source 126. Accordingly, the brightness of the receiving optical system may be controlled. By controlling the effective diameter size and center thickness of each lens, the optical system 100A can control the irradiated light to improve the resolution, prevent the deterioration of the optical characteristics due to temperature change, and control the chromatic aberration characteristics. By controlling the effective diameter and thickness of the lenses, the assembly of the optical system 100A may be improved.

### <First Embodiment>

Referring to FIGS. 1 to 3, the optical system 100A may include a first lens 121, a second lens 122, a third lens 123, and a fourth lens 124 that are sequentially aligned from an object toward a light source along an optical axis OA1. The first to fourth lenses 121, 122, 123, and 124 may be defined as a lens portion. The optical system 100A may include a diffuser 120 and may be defined as a transmission optical system or a transmission lens assembly. Laser light generated from the light source 126 may be emitted by the fourth lens 124, the third lens 123, the second lens 122, and the first lens 121 and may be irradiated to a subject through the diffuser 120.

The aperture stop ST may be disposed between the object-side surface of the first lens 121 and the diffuser 120. The aperture stop ST may be disposed closer to the object-side surface of the first lens 121 than the diffuser 120, so as to control the amount of light emitted through the first lens 121. The diffuser 120 may be disposed on the object-side surface of the aperture stop ST, and may refract light traveling through the aperture stop ST toward the subject as parallel light. The diffuser 120 may have a micro lens array on the object-side surface or the light source-side surface, and may control the path of the traveling light by using the micro lens array.

The power of the first lens 121 may be positive (+) or negative (-) on the optical axis OA1. The power of the first lens 121 has a positive (+) value. The first lens 121 may include a plastic material or a glass material, and may be, for example, a glass material. The first lens 121 made of a glass material may reduce changes in the center position and the curvature radius due to temperature changes in the surrounding environment, and may protect the output-side surface of the optical system 100A. The object-side first surface S1 of the first lens 121 with respect to the optical axis may be convex, and the light source-side second surface S2 may be concave. The first surface S1 and the second surface S2 may have spherical surfaces. The first lens 121 may have a meniscus shape convex toward the object side. Differently, the first surface S1 may have a concave shape, and the second surface S2 may have a convex shape, on the optical axis OA1. Since the first surface S1 is convex and the second surface S2 is concave, the light emitted may be refracted in a direction close to the optical axis OA1, the distance between the first and second lenses 121 and 122 may be reduced, and the effective diameter of the first lens 121 may be reduced. The effective diameter of the light source-side surface of the second lens 122 may be designed to be smaller than the effective diameter of the object-side surface by the shape of the lens surface of the first lens 121.

When the refractive index of the first lens 121 is Nd1, the condition may satisfy: 1.70 < Nd1 or 1.70 < Nd1 < 2.0. Since the refractive index Nd1 of the first lens 121 exceeds 1.70, the curvature radius of the second surface S2 of the first lens 121 may be larger than the curvature radius of the lens surfaces of the aspherical lens, and the lens may be easily manufactured. If the refractive index Nd1 of the first lens 121 is smaller than the above condition, the lens surfaces must be formed sharply concave or convex in order to increase the refractive power of the first and second lenses 121 and 122, and in this case, the lens manufacturing is not easy, the lens defect rate increases, and the yield may be reduced.

Since the first lens 121 is arranged on the light source side of the aperture stop ST and diffuser 120, the center thickness CT1 of the first lens 121 may be provided thinner than the center thickness CT2 of the second lens 122. Since the first lens 121 is disposed on the light source side of the aperture stop ST and diffuser 120, it can have the largest effective diameter among the lenses. Since the first lens 121 is disposed on the light source side of the aperture stop ST and diffuser 120, it can have a curvature radius larger than the average of the curvature radii of the second lens 122. Since the first lens 121 has positive refractive power (F1 > 0), the first lens 121 can refract the emitted light in the direction of the optical axis, and can suppress an increase in the distance from the light source side or rear side lens of the first lens 121.

The second lens 122 may be disposed between the first lens 121 and the third lens 123. The power of the second lens 122 may be positive (+) or negative (-) on the optical axis OA1. The power of the second lens 122 has a positive value. The second lens 122 may include a plastic or glass material, and may be provided as a spherical lens made of, for example, glass. On the optical axis OA1, the object-side third surface S3 of the second lens 122 may be convex, and the light source-side fourth surface S4 may be concave. The third and fourth surfaces S3 and S4 may be spherical. Alternatively, the third surface S3 may be convex, and the fourth surface S4 may have a convex shape. Alternatively, the second lens 122 may have a concave shape on both sides. When the refractive index of the second lens 122 is Nd2, the following condition may satisfy: 1.70 < Nd2 or 1.70 < Nd2 < 2.10. The refractive index Nd2 of the second lens 122 may be higher than the refractive index of the last lens or the aspherical lens. In addition, the curvature radius of the third surface S3 of the second lens 122 may be larger than the curvature radius of the object-side surface of the last lens or the aspherical lens, so that the lens may be easily manufactured.

Since the third surface S3 of the second lens 122 is convex and has a curvature radius smaller than the curvature radius of the second surface S2, the center distance between the first and second lenses 121 and 122 may be less than 1 mm or smaller than the thickness of the diffuser 120. The fourth surface S4 of the second lens 122 is concave and has a curvature radius greater than that of the third surface S3, so that the center distance CG2 between the second lens 122 and the third lens 123 may be spaced apart by 10 mm or more, and an increase in the effective diameter of the third lens 123 may be suppressed.

The power of the third lens 123 may be positive (+) or negative (-) on the optical axis OA1. The power of the third lens 123 may have a negative (-) value. The third lens 123 may include a plastic or glass material, and may be, for example, a glass material. The fifth surface S5 on the object side of the third lens 123 on the optical axis may be convex, and the sixth surface S6 on the light source side may be concave. The third lens 123 may have a meniscus shape convex toward the object from the optical axis OA1. At least one or both of the fifth surface S5 and the sixth surface S6 may be spherical. Alternatively, the third lens 123 may have a meniscus shape convex on both sides or convex toward the light source. Alternatively, the third lens 123 may have a concave shape on both sides from the optical axis.

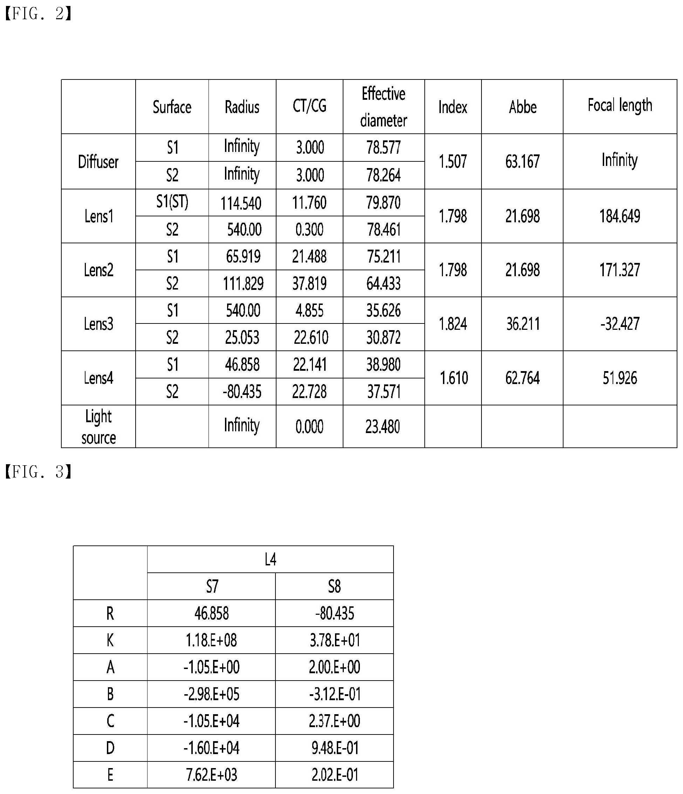

The power of the fourth lens 124 may have a positive (+) or negative (-) refractive power on the optical axis OA1. The power of the fourth lens 124 may have a positive value. The fourth lens 124 may include a plastic or glass material, and may be provided as a glass material. The fourth lens 124 may be an injection-molded glass mold. The seventh surface S7 on the object side of the fourth lens 124 on the optical axis may be convex, and the eighth surface S8 on the light source side may be convex. The fourth lens 124 may have a convex shape on both sides on the optical axis OA1. Alternatively, the fourth lens 124 may have a meniscus shape convex toward the light source. Alternatively, the fourth lens 124 may have a concave shape on both sides on the optical axis OA1. At least one or both of the seventh surface S7 and the eighth surface S8 may be aspherical. Aspherical coefficients of the seventh and eighth surfaces S7 and S8 may be provided as L4S1 and L4S2 of FIG. 3. The seventh surface S7 may be provided without a critical point from the optical axis OA1 to the end of the effective region. The eighth surface S8 may be provided without a critical point from the optical axis OA1 to the end of the effective region. As another example, at least one of the seventh surface S7 and the eighth surface S8 may have a critical point. Here, the critical point in each lens surface may be a point at which the sign of the slope value in the direction perpendicular to the optical axis OA and the optical axis OA changes from positive (+) to negative (-) or negative (-) to positive (+), and may mean a point at which the slope value is 0. Also, the critical point may be a point where the slope value decreases as the value increases or a point where the slope value increases as the value decreases.

The effective diameter of the fourth lens 124 may be larger than that of the third lens 123. The effective diameter of the third lens 123 may be the smallest among the lenses. The powers of the first and second lenses 121 and 122 and the fourth lens 124 may have positive values, and the power of the third lens 123 may have negative values. At least one of the object-side and light source-side surfaces of the fourth lens 124 may have a free-form surface, i.e., a non-rotationally symmetrical surface. The fourth lens 124 may be an aspherical lens closest to the light source 126. Aberrations such as spherical aberration and chromatic aberration may be improved by the lens surface having an aspherical surface.

The center thicknesses of the first to fourth lenses 121 to 124 are represented by CT1 to CT4, the edge thicknesses at the ends of the effective regions of each lens are represented by ET1 to ET4, and the center distances between two adjacent lenses may be defined as CG1 to CG3. The first to fourth lenses 121 to 124 may satisfy at least one of the following conditions.

| | | | |
|---|---|---|---|
| Condition 1: | CT3 < CT1 < CT2 | Condition 2: | CT2 < CT4 |
| Condition 3: | (CT2-CT1) < (CT4-CT3) | Condition 4: | ET1 < ET3 < CT2 |
| Condition 5: | 0 < CG1 < 1mm | Condition 6: | CG3 < CG2 |
| Condition 7: | CT4 < CG2 | Condition 8: | CT1 < CG3 |
| Condition 9: | CT1+CT2 < CG2 | | |

The center thickness CT4 of the fourth lens 124 is the largest among the lenses, and the center thickness CT3 of the third lens 123 is the smallest among the lenses. The maximum center thickness may be 10 mm or thicker than the minimum center thickness. That is, the center thicknesses of the two lenses adjacent to the object are provided to be thick, thereby improving heat resistance and assembling, and by arranging a thick aspherical lens, it is possible to prevent deterioration of optical performance on the light source 126, and to adjust the size (light source height) of the sensor system.

Since the aperture stop ST and the diffuser 120 are arranged on the object side of the first lens 121, the center thickness CT1 of the first lens 121 is thinner than the center thickness CT2 of the second lens 122, and the curvature radius is provided to be larger than the curvature radius of the second lens 122, so that light incident through the second lens 122 may be refracted toward the diffuser 120. Among the first to fourth lenses 121-124, the maximum distance between adjacent lenses is CG_Max, and among the first to fourth lenses 121-124, the minimum distance between adjacent lenses is CG_Min, and the following Equation may satisfy: 50 < CG_Max/CG_Min.

Since the center distance CG2 between the second lens 122 and the third lens 123 is the largest among the center distances between adjacent lenses, the effective diameters of the first and second lenses 121 and 122 may be larger than the effective diameter of the third lens 123. The effective diameter of the third lens 123 is the smallest among the lenses, and the curvature radius of the sixth surface S6 of the third lens 123 is the smallest among the lens surfaces, so that light incident through the fourth lens 124 may be refracted to the second lens 122 without loss. The effective diameter of each of the first to fourth lenses 121-124 may be larger than the diagonal length of the light source 126. The fourth lens 124 has an aspherical surface and can guide the incident light to a spherical lens. By adjusting the curvature radius and effective diameter of each of the above lenses, the chief ray angle (CRA) may be minimized from the optical axis to the end of the effective region, that is, in the entire field, to maximize the transmission efficiency. Here, when the CRA is large, the asymmetry of the divergence angle increases based on the center of the light source 126 of the transmission optical system 100A, which may reduce the transmission efficiency.

The optical axis distance between the first lens 121 and the diffuser 120 is CG0 and may be less than 5 mm. Since the diffuser 120 is spaced apart from the convex first surface S1 of the first lens 121 by the distance, the increase in the effective length of the diffuser 120 may be suppressed.

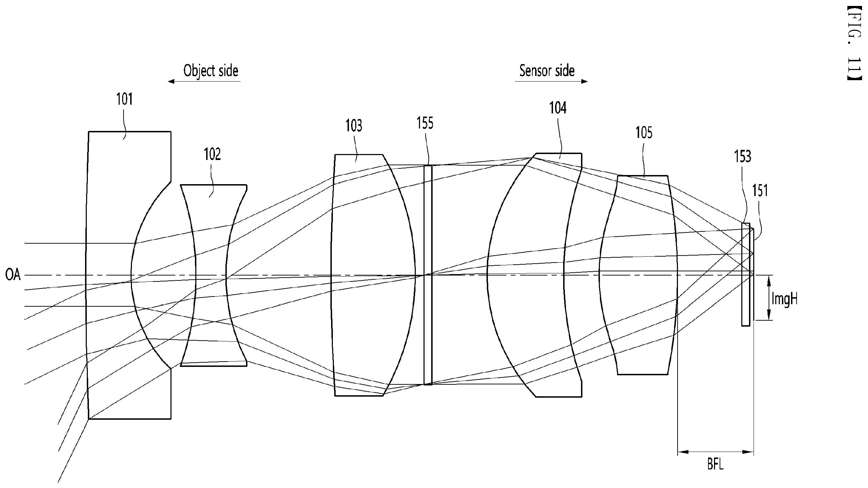

The diffuser 120 can refract the light emitted through the first lens 121 and emit it as parallel light. Since the light emitted through the first lens 121 is provided as parallel light, the curvature radius of the object-side surface of the fifth lens 101 of the receiving optical system of FIG. 11 may be provided to be large. Accordingly, the amount of light incident through the fifth lens 101 may be increased. The diagonal length of the diffuser 120 may be larger than the maximum diameter of the light source 126 and larger than the maximum diameters of the third and fourth lenses 123 and 124. The exit-side surface of the diffuser 120 is the object-side surface, and the incident-side surface is the light source-side surface.

In the transmission optical system 100A having the first to fourth lenses 121 to 124, since the object-side diffuser 120 is arranged in a one-dimensional shape, the horizontal FOV (HFOV) of the reception optical system 100 may be diffused to 120 degrees or more. The sum of the refractive indices of the lenses of the lens portion in the optical system 100A is 6 or more, for example, in the range of 6 to 10. The sum of the Abbe numbers of each of the lenses is 160 or less, for example, in the range of 100 to 160. By adjusting the refractive indices of the lenses in the transmission optical system 100A, it is possible to prevent a decrease in the transmission efficiency for a temperature change of -45 to 120 degrees and to optimize the thermal compensation. In addition, by adjusting the Abbe numbers of the lenses, it is possible to minimize the deviation in the transmission efficiency according to the wavelength.

The sum of the center thicknesses of the entire lens may be 20 mm or more, for example, in the range of 20 mm to 80 mm, and the average of the center thicknesses may be 5 mm or more, for example, in the range of 5 mm to 25 mm. The sum of the center distances between the lenses in the optical axis OA1 may be 20 mm or more, for example, in the range of 20 mm to 80 mm, and the maximum center distance between the lenses may be greater than the maximum center thickness of the lenses. In addition, the maximum of the effective diameters of each lens surface of the transmission optical system 100A may be greater than the maximum center distance. The transmission optical system 100A may adjust the thickness of the lenses to prevent degradation of optical performance for temperature changes from -45 degrees to 120 degrees and optimize thermal compensation.

In the transmission optical system according to the first embodiment of the invention, FOV may be less than 30 degrees, for example, more than 1 degree and less than 30 degrees or more than 5 degrees and less than 15 degrees. The F number of the optical system may be 5 or more, for example, in the range of 5 to 20 or 7 to 17. The diagonal length of the light source 126 may be 10 mm or more, and may be greater than the height of the image sensor in the vertical direction. The invention may provide a vehicle LIDAR device that suppresses changes in the focus image position due to temperature changes by stacking glass lenses and provides an aspherical lens to correct various aberrations.

FIG. 2 is an example of lens data of the transmission optical system of FIG. 1. As shown in FIG. 2, the curvature radius of the optical axis OA1 of the first to fourth lenses 121, 122, 123, and 124, the center thickness CT of the lenses, the center distance CG between the lenses, the refractive index at the d-line, the Abbe number, and the size of the effective diameter may be set. As shown in FIG. 3, the lens surface of the fourth lens 124 among the lenses of the embodiment may include an aspherical surface having a curvature radius R, a conic constant K, and a 14th-order aspherical coefficient A to E. For example, the object-side surface and the light source-side surface of the fourth lens 124 may be lens surfaces having a 14th-order aspherical coefficient. As described above, since the aspherical surface having 14th-order aspherical coefficient (a non-zero value) can significantly change the aspherical shape of the peripheral portion, the optical performance of the peripheral portion of the FOV may be well compensated.

When comparing the focal lengths in absolute values, the focal length of the first lens 121 is the largest among the lenses and may be 150 or more. Accordingly, it may have improved MTF characteristics, aberration control characteristics, etc. in the FOV range set in the optical system, and may have good optical performance.

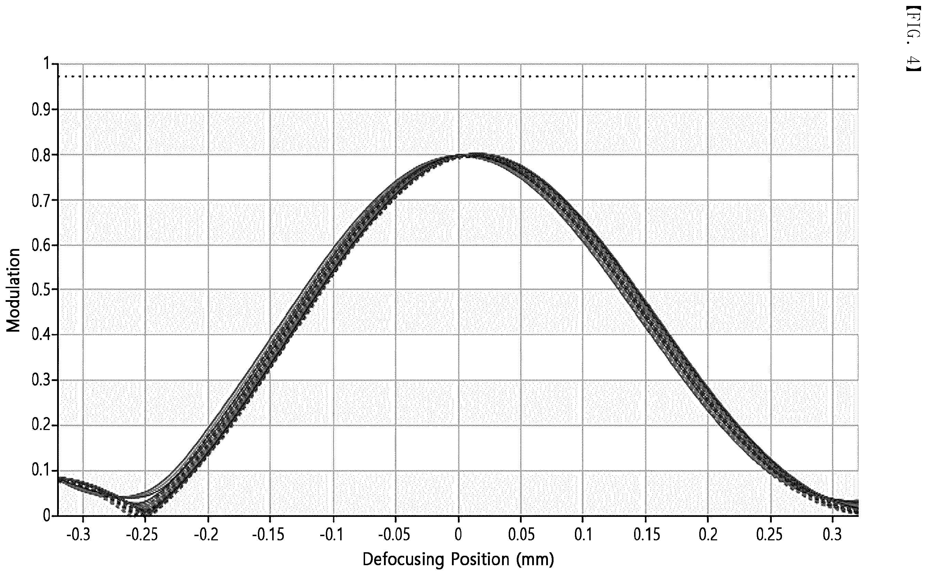

FIG. 4 is a graph showing the diffraction MTF (Modulation transfer function) in the transmission optical system of FIG. 1, and a graph showing the modulation according to the spatial frequency at room temperature. The optical system has chromatic aberration, which may be corrected using the last aspherical lens, and since the amount of change in the characteristics of the glass lenses according to temperature change is small, it is effective to correct the chromatic aberration between the lenses even when the temperature changes. In addition, F, BFL, F#, FOV, TTL, and RsH may satisfy the following conditions. Here, F is the effective focal length of the receiving optical system, BFL is the optical axis distance from the last lens, i.e., the fourth lens 104, to the surface of the light source 126, F# is the F number of the optical system, TTL is the optical axis distance from the first lens 121 to the surface of the light source 126, FOV is the field of view of the receiving optical system, and RsH is 1/2 of the diagonal length of the light source.

| | | | |
|---|---|---|---|
| Condition 1: | FOV < F# | Condition 2: | BFL < F |
| Condition 3: | F#*FOV < TTL | Condition 4: | EPD < RsH |
| Condition 5: | RsH < BFL | | |

### <Second embodiment>

The second embodiment will be described with reference to FIGS. 5 to 8, and the same configuration and description as those of the first embodiment will be omitted in the configuration and description of the second embodiment.

Referring to FIGS. 5 to 7, the optical system 100A may include a first lens 131, a second lens 132, a third lens 133, and a fourth lens 134. The aperture stop ST may be disposed between the object-side surface of the first lens 131 and the diffuser 120. The aperture stop ST is disposed closer to the object-side surface of the first lens 131 than the diffuser 120, so as to control the amount of light emitted through the first lens 131.

The first to fourth lenses 131-134 may be made of glass. The first to third lenses 131, 132, and 133 are spherical lenses. The first, second, and fourth lenses 131, 132, and 134 may have positive power values, and the third lens 133 may have negative power values. The first surface S1 of the first lens 131 may be convex, and the second surface S2 may be concave. The first surface S1 and the second surface S2 may have spherical surfaces. The refractive index Nd1 of the first lens 131 may satisfy the condition: 1.70 < Nd1 or 1.70 < Nd1 < 2.0. The center thickness CT1 of the first lens 131 may be provided thinner than the center thickness CT2 of the second lens 132. The first lens 131 may have the largest effective diameter among the lenses. The first lens 131 may have a curvature radius greater than the average curvature radius of the second lens 132. Since the first lens 131 has positive refractive power (F1 > 0), the first lens 131 may refract the emitted light in the direction of the optical axis, and may suppress an increase in the distance from the light source side or the rear side lens of the first lens 131.

The object-side third surface S3 of the second lens 132 may be convex, and the light source-side fourth surface S4 may be concave. The third and fourth surfaces S3 and S4 may be spherical. When the refractive index of the second lens 132 is Nd2, the following condition may satisfy: 1.70 < Nd2 or 1.70 < Nd2 < 2.10. The refractive index Nd2 of the second lens 132 may be higher than the refractive index of the last lens or the aspherical lens. In addition, the curvature radius of the third surface S3 of the second lens 132 may be larger than the curvature radius of the object-side surface of the last lens or the aspherical lens, so that lens manufacturing may be easy. Since the third surface S3 of the second lens 132 is convex and has a smaller curvature radius than that of the second surface S2, the center distance between the first and second lenses 131 and 132 may be less than 1 mm or smaller than the thickness of the diffuser 120. Since the fourth surface S4 of the second lens 132 is concave and has a larger curvature radius than that of the third surface S3, the center distance CG2 between the second lens 132 and the third lens 133 may be set to be 10 mm or more, and an increase in the effective diameter of the third lens 133 may be suppressed.

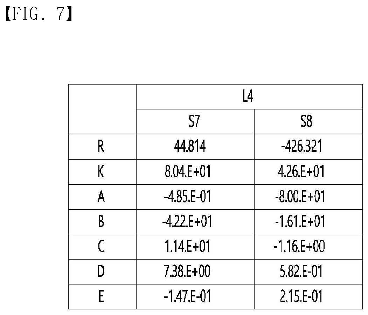

On the optical axis, the object-side fifth surface S5 of the third lens 133 may be convex, and the light source-side sixth surface S6 may be concave. At least one or both of the fifth surface S5 and the sixth surface S6 may be spherical. On the optical axis, the object-side seventh surface S7 of the fourth lens 134 may be convex, and the light source-side eighth surface S8 may be convex. The fourth lens 134 may have a shape in which both sides are convex on the optical axis OA1. At least one or both of the seventh surface S7 and the eighth surface S8 may be aspherical. Aspherical coefficients of the seventh and eighth surfaces S7 and S8 may be provided as L4S1 and L4S2 of FIG. 7. The seventh surface S7 may be provided without a critical point from the optical axis OA1 to the end of the effective region. The eighth surface S8 may be provided without a critical point from the optical axis OA1 to the end of the effective region. As another example, at least one of the seventh surface S7 and the eighth surface S8 may have a critical point. The effective diameter of the fourth lens 134 may be larger than the effective diameter of the third lens 133. The effective diameter of the third lens 133 may be the smallest among the lenses. The fourth lens 134 may be an aspherical lens closest to the light source 126. By means of the lens surface having an aspherical surface, aberrations such as spherical aberration and chromatic aberration may be improved.

The first to fourth lenses 131 to 134 may satisfy at least one of the following conditions.

| | | | |
|---|---|---|---|
| Condition 1: | CT3 < CT1 < CT2 | Condition 2: | CT4 < CT2 |
| Condition 3: | (CT4-CT3) < (CT2-CT1) | Condition 4: | ET1 < ET3 < CT2 |
| Condition 5: | 0 < CG1 < 1mm | Condition 6: | CG3 < CG2 |
| Condition 7: | CT4 < CG2 | Condition 8: | CT1 < CG3 |
| Condition 9: | CT1+CT2 < CG2 | | |

The center thickness CT2 of the second lens 132 is the largest among the lenses, and the center thickness CT3 and CT4 of the third or fourth lens 133 and 134 is the smallest among the lenses. The maximum center thickness may be 5 mm or more thicker than the minimum center thickness. That is, by providing the center thickness of the two lenses adjacent to the object to be thick, heat resistance and assembly are improved, and by arranging the thick aspherical lens, the optical performance degradation on the light source 126 may be prevented, and the size (light source height) of the sensor system may be adjusted.

Since the aperture stop ST and the diffuser 120 are disposed on the object side of the first lens 131, the center thickness CT1 of the first lens 131 is thinner than the center thickness CT2 of the second lens 132, and the curvature radius is provided to be larger than the curvature radius of the second lens 132, so that the light incident through the second lens 132 may be refracted toward the diffuser 120. Among the first to fourth lenses 131-134, the maximum distance between adjacent lenses is CG_Max, and among the first to fourth lenses 131-134, the minimum distance between adjacent lenses is CG_Min, and the following Equation may satisfy: 50 < CG_Max/CG_Min.

Since the center distance CG2 between the second lens 132 and the third lens 133 is the maximum distance between adjacent lenses, the effective diameters of the first and second lenses 131 and 132 may be larger than the effective diameter of the third lens 133. The effective diameter of the third lens 133 is the smallest among the lenses, and the curvature radius of the sixth surface S6 of the third lens 133 is the smallest among the lens surfaces, so that light incident through the fourth lens 134 may be refracted to the second lens 132 without loss.

The effective diameter of each of the first to fourth lenses 131-134 may be greater than the diagonal length of the light source 126. The fourth lens 134 has an aspherical surface and can guide the incident light to a spherical lens. By adjusting the curvature radius and the effective diameter of each lens, the CRA from the optical axis to the end of the effective region, that is, in the entire field, may be minimized to maximize the transmission efficiency.

The optical axis distance between the first lens 131 and the diffuser 120 is CG0 and may be less than 1 mm. Since the diffuser 120 is spaced apart from the convex first surface S1 of the first lens 131 by the distance, the increase in the effective length of the diffuser 120 may be suppressed. Since the light emitted through the first lens 131 is provided as parallel light, the curvature radius of the object-side surface of the fifth lens 101 of the receiving optical system of FIG. 11 may be provided to be large. Accordingly, the amount of light incident through the fifth lens 101 may be increased. The diagonal length of the diffuser 120 may be larger than the maximum diameter of the light source 126 and the effective diameter of the third and fourth lenses 133 and 134.

In the transmission optical system 100A having the first to fourth lenses 131 to 134, since the object-side diffuser 120 is arranged in a one-dimensional shape, the horizontal FOV (HFOV) of the reception optical system 100 may be diffused to 120 degrees or more. In the optical system 100A of the embodiment, the sum of the refractive indices of the lenses of the lens portion is 6 or more, for example, in the range of 6 to 10. The sum of the Abbe numbers of each of the above lenses is 160 or less, for example, in the range of 100 to 160. By adjusting the refractive index of the lenses within the transmission optical system 100A, the transmission efficiency may be prevented from decreasing due to temperature changes from -45 to 120 degrees, and thermal compensation may be optimized. In addition, by adjusting the Abbe numbers of the lenses, the deviation of the transmission efficiency according to the wavelength may be minimized.

The sum of the center thicknesses of the entire lenses may be 20 mm or more, for example, in the range of 20 mm to 80 mm, and the average of the center thicknesses may be 5 mm or more, for example, in the range of 5 mm to 25 mm. The sum of the center distances between the lenses on the optical axis OA1 may be 20 mm or more, for example, in the range of 20 mm to 80 mm, and may be greater than the sum of the center thicknesses of the lenses. In addition, the maximum center distance between the lenses may be greater than the maximum center thickness of the lenses. In addition, the maximum of the effective diameters of each lens surface of the transmission optical system 100A may be greater than the maximum center distance. The transmission optical system 100A can optimize thermal compensation and prevent degradation of optical performance for temperature changes from -45 degrees to 120 degrees by adjusting the thickness of the lenses.

In the transmission optical system according to the second embodiment of the invention, FOV may be less than 30 degrees, for example, more than 1 degree and less than 30 degrees, or more than 5 degrees and less than 15 degrees. The F number of the optical system may be 5 or less, for example, in the range of 0.5 to 5 or in the range of 1 to 3. The diagonal length of the light source 126 may be 10 mm or more, and may be greater than the height of the image sensor in the vertical direction. The invention may provide a vehicle LIDAR device that suppresses changes in the focus image position due to temperature changes by stacking glass lenses and corrects various aberrations by providing an aspherical lens.

As shown in FIG. 7, the lens surface of the fourth lens 134 among the lenses of the embodiment may include an aspherical surface having a curvature radius R, a conic constant K, and a 14th-order aspherical coefficient A to E. For example, the object-side surface and the light source-side surface of the fourth lens 134 may be lens surfaces having a 14th-order aspherical coefficient. As described above, since an aspherical surface having 14th-order aspherical coefficient (a non-zero value) can significantly change the aspherical shape of the periphery, the optical performance of the periphery of the FOV may be well compensated.

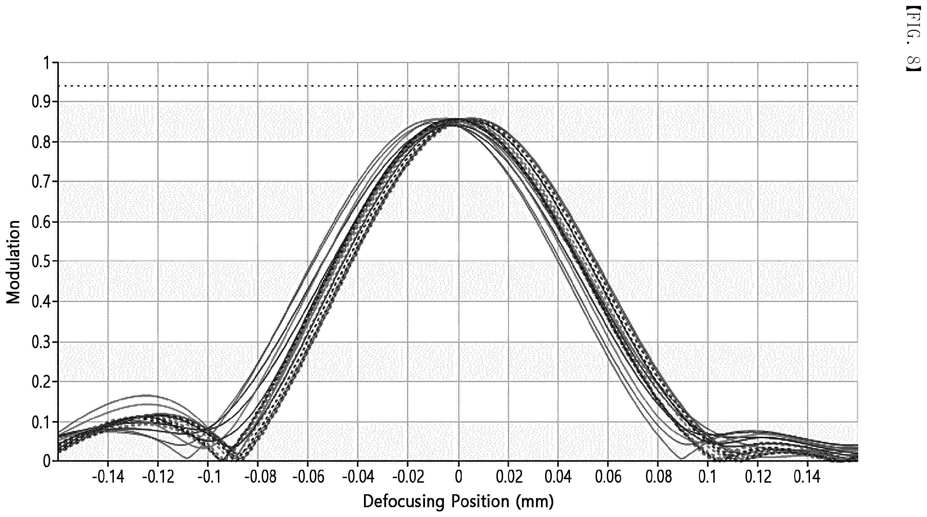

When comparing the focal lengths in absolute values, the focal length of the first lens 131 is the largest among the lenses and may be 120 or more. Accordingly, it can have improved MTF characteristics, aberration control characteristics, etc. in the FOV range set in the optical system, and can have good optical performance. FIG. 8 is a graph showing the diffraction MTF in the transmission optical system of FIG. 1, and a graph showing the modulation of brightness according to the spatial frequency at room temperature.

In addition, F, BFL, F#, FOV, TTL and RsH may satisfy the following conditions.

| | | | |
|---|---|---|---|
| Condition 1: | F# < FOV | Condition 2: | BFL < F |
| Condition 3: | F#*FOV < EPD < TTL | Condition 4: | RsH < EPD |
| Condition 5: | RsH < BFL | | |

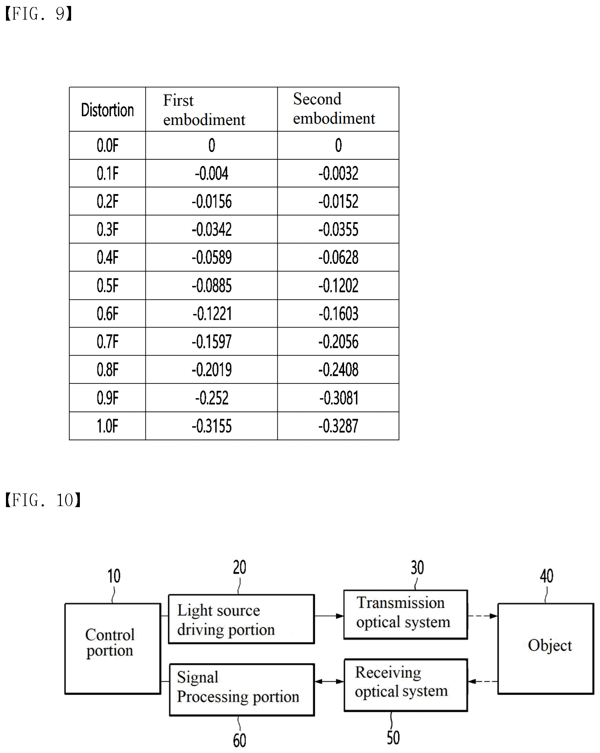

The first and second embodiments are optical systems applied to a LIDAR device, and the first lens 121 and 131 may be provided with a glass material. This has the advantage that the glass material is more scratch-resistant and less sensitive to external temperature than a plastic material. In order to more effectively prevent scratches caused by foreign substances or placed inside a vehicle, a glass lens is used as the first lens 121 and 131, and the object-side surface of the first lens 121 and 131 can have a convex shape so that external foreign substances do not accumulate. The LIDAR device can detect the distance, direction, speed, temperature, material distribution and concentration characteristics to an object when the vehicle is running. These LIDAR devices may be used for advanced driver assistance systems (ADAS). FIG. 9 is a table showing the distortion characteristics of the receiving optical system according to the first and second embodiments, and it may be seen that the change in the distortion characteristics from the center (0.0 F) of the light source to the edge (1.0 F) is not large.

The optical system 100A according to the first and second embodiments may further include a reflective member (not shown) for changing the path of light. The reflective member may be implemented as a prism that reflects the emitted light toward the lenses. Hereinafter, the optical system according to the first and second embodiments will be described in detail. The transmission optical system according to the first and second embodiments can prevent the degradation of optical performance from low to high temperatures by considering the characteristics of the vehicle optical system. For example, after designing a lens at room temperature, the value of the dn/dt, which is a temperature-dependent refractive index change coefficient, is assembled by considering the power combination of each lens, and the value of the temperature coefficient (dn/dt) according to the refractive index of the lens and the defocus for the thickness variable according to low temperature, room temperature, and high temperature may be set to 5*µ*m or less. To this end, the first to third lenses are made of spherical glass material, and the fourth lens is made of aspherical glass material.

The optical system 100A according to the embodiment disclosed above may satisfy at least one or two or more of the mathematical equations described below. Accordingly, the optical system 100A according to the embodiment can have improved optical characteristics. For example, when the optical system 100A satisfies at least one mathematical equation, the optical system 100A can effectively control aberration characteristics such as chromatic aberration and distortion aberration, and can have good optical performance in the center and periphery of the FOV. In addition, the optical system 100A can have improved resolution. In addition, the thicknesses of the lens on the optical axis OA1 and the distances of the adjacent lenses in the optical axis OA1 described in the equations can refer to the above-described embodiments.
$0 < CT 1 / CT 2 < 1$

CT1 is the center thickness of the first lens, and CT2 is the center thickness of the second lens. In equation 1, by setting the center thickness CT1 of the first lens 121 and 131 and the center thickness CT2 of the second lens 122 and 132, the rigidity of the first lens 121 and 131 may be prevented from being deteriorated, and factors affecting aberration may be controlled. In addition, by providing the first and second lenses with the above thickness as glass lenses, heat resistance may be improved. Preferably, equation 1 may satisfy: 0.3 < CT1 / CT2 < 0.8.
$0.5 < CT 4 / CT 3 < 7$

CT3 and CT4 are the center thicknesses of the third and fourth lenses. In equation 2, by setting the center thicknesses of the third and fourth lenses, the rigidity deterioration and the optical characteristic deterioration of the glass lens may be prevented, and factors affecting aberration may be controlled. Preferably, Equation 2 may satisfy: 1 < CT4 / CT3 < 5. Preferably, the first embodiment may satisfy the following equation: 2 < CT4 / CT3 < 5, and the second embodiment may satisfy the following equation: 1 < CT4 / CT3 < 2.
$1 < CT 2 / CT 3 < 7$

In equation 3, the center thicknesses of the second and third lenses may be set, so that thermal compensation may be optimized according to temperature changes from low temperature to high temperature, and optical performance deterioration may be prevented. Preferably, equation 3 may satisfy: 1 < CT2 / CT3 < 5. Preferably, the first embodiment satisfies the following equation: 2 < CT2/CT3 < 5, and the second embodiment may satisfy the following equation: 1 < CT2/CT3 < 3.
$1 < CG 2 / CT 2 < 4$

CG2 is the center distance between the second and third lenses. In equation 4, by setting the center distance between the second and third lenses to the above range, light refracted through the spherical third lens 123 and 133 may be transmitted to the effective region of the second lens 122 and 132 by the center distance CG2 between the second and third lenses. When equation 4 is satisfied, the effective diameter difference between the second and third lenses may be the largest among the effective diameter differences between adjacent two lenses. When equation 4 is satisfied, the difference in curvature radius between the object-side surface and the light source-side surface of the third lens may be the largest among the differences between the curvature radii of the object-side surface and the light source-side surface of each lens. Equation 4 may satisfy: 1 < CG2 / CT2 < 3.
$1 < CG 2 / \left(CT3+CT4\right) < 4$

In Equation 5, the center distance CG2 between the second and third lenses is set to be larger than the sum of the center thicknesses CT3 and CT4 of the third and fourth lenses, thereby reducing the effective diameter difference between the first and second lenses. In addition, the effective diameter of the second lens 122 and 132 may be adjusted by the effective diameter and curvature radius of the third lens and the center distance CG2 between the second and third lenses. Equation 5 may satisfy: 1 < CG2 / (CT3+CT4) < 3.
$500 < CG 2 / CG 1 < 200$

CG1 is the center distance between the first and second lenses. In equation 6, the center distance CG1 between the first and second lenses and the center distance CG2 between the second and third lenses may be set to set the center distance between the spherical lenses. Preferably, equation 6 may satisfy: 100 < CG1 / CG2 < 190. Accordingly, the center distance between the second and third lenses may be increased and the center distance between the first and second lenses may be decreased.
$1 < CG 2 / CG 3 < 4$

In equation 7, the center distance CG2 between the second and third lenses may be set to be larger than the center distance CG3 between the third and fourth lenses, so that the center distance between the spherical lens and the aspherical lens may be decreased compared to the center distance between the object-side spherical lenses. Preferably, Equation 7 may satisfy: 1.2 < CG2 / CG3 < 2.6.
$1 < CG 2 / \left(CT1+CG1+CT2\right) < 3$

In equation 8, the center distance CG2 between the second and third lenses may be set to be greater than the optical axis distance between the object-side surface of the first lens 121 and 131 and the light source-side surface of the second lens 122 and 132. Accordingly, the effective diameter of the object-side surface of the first lens 121 and 131 may be set to be greater than the effective diameter of the object-side surface of the second lens 122 and 132, and the first and second lenses can have a convex meniscus shape toward the object. Preferably, Equation 8 may satisfy: 1 < CG2 / (CT1+CG1+CT2) < 2.
$TTL < SD$

SD is the optical axis distance from the aperture stop ST to the surface of the light source 126, and TTL is the optical axis distance from the object-side surface of the first lens to the surface of the light source. Preferably, the aperture stop ST may be arranged around the perimeter of the object-side surface of the first lens 121 and 131 or the perimeter of the light source-side surface of the diffuser 120. When the optical system satisfies Equation 9, the aperture stop ST may be positioned at the farthest position from the light source 126, that is, closer to the object than the first lens 121 and 131, thereby controlling the amount of light emitted.
$1.70 < Nd 1$

Nd1 is the refractive index of the first lens 121 and 131 at the d-line. In equation 10, by setting the refractive index of the first lens 121 and 131 high, the factor affecting the reduction of the third-order aberration (Seidel aberration) of the optical system may be adjusted, and the aberration that may occur when the TTL is somewhat longer may be reduced. Equation 10 preferably satisfies: 1.75 < Nd1 < 2.0. If it is designed to be lower than the lower limit of equation 10, the performance of reducing aberration may be obtained, and the refractive power of the first lens is weakened, so that light cannot be collected efficiently, and the performance of the optical system may deteriorate. If it is designed to be higher than the upper limit of equation 10, there is a disadvantage that it is difficult to obtain materials. In addition, when the refractive index of the first lens 121 is designed to be lower than the lower limit of Equation 4, the curvature radius of the first and second lenses may be increased in order to increase the refractive power of the first and second lenses.
$1.7 < Aver \left(Nd1:Nd4\right) < 1.8$

Aver(Nd1:Nd4) is the average of the refractive index values of the d-line of the first to fourth lenses. When equation 10-1 is satisfied, the optical system 100A can suppress the influence of TTL.
$0.5 < Nd 1 : Nd 3 < 1.5$

Nd1 and Nd3 are the refractive indices of the d-line of the first and third lenses. In equation 11, the refractive index of the first lens 121 and 131 may be reduced to reduce the difference in the refractive index of the third lens 123 and 133, thereby preventing the degradation of color dispersion by the lenses made of glass. Preferably, the refractive indices of the first, second, and third lenses may be the same.
$0.5 < Nd 1 : Nd 4 < 1.5$

Nd1 and Nd4 are the refractive indices of the first and fourth lenses at the d-line. In Equation 12, the refractive index of the first lens 121 and 131 may be set higher than the refractive index of the fourth lens 124 and 134, thereby controlling the color dispersion by the lens made of spherical material and the color dispersion by the aspherical lenses. Preferably, Equation 12 may satisfy: 0.8 < Nd1/Nd4 < 1.3.
$\left(Vd2*Nd2\right) < \left(Vd4*Nd4\right)$

Nd2 and Nd4 are the refractive indices of the d-line of the second and fourth lenses, and Vd2 and Vd4 are the Abbe numbers of the second and fourth lenses. In Equation 13, the product of the refractive indices and Abbe numbers of the second lens 121 and 131 is set to be smaller than the product of the refractive indices and Abbe numbers of the fourth lens 124 and 134, so that the color dispersion by the spherical material lenses and the color dispersion by the aspherical lenses may be controlled.

$TD < SD$

TD is the optical axis distance from the object-side surface of the first lens 121 to the light source-side surface of the fourth lens 124. When the optical system satisfies Equation 14, the aperture stop ST may be disposed on the object side more than the first lens 121.
$TD < TTL < SD$

If this equation 14-1 is satisfied, the position of the aperture stop ST may be set to be located on the object side rather than the first lens 121.
$1 < CA 42 < CT 4 < 5$

CA42 is the effective diameter of the light source side of the fourth lens 124 and 134, and CT4 is the center thickness of the fourth lens. If equation 15 is satisfied, the ratio of the effective diameter of the last lens and the center thickness may be set. Preferably, the following equation may satisfy: 1.2 < CA42 < CT4 < 4.
$SA 42 < CG 2 < CA 11$

SA42 is the effective radius of the fourth lens, and CA11 is the effective diameter of the object-side surface of the first lens. If equation 16 is satisfied, the center distance between the second and third lenses may be increased and the effective radius of the fourth lens may be set not to increase.
$1 < CA 11 < \left(CG1+CG2\right) < 3$

In equation 17, the effective diameter CA11 of the object-side surface of the first lens, the center distance CG1 between the first and second lenses, and the center distance CG2 between the second and third lenses may be set, and if this is satisfied, the number of lenses of the spherical lenses may be reduced. Preferably, the following equation may satisfy: 1 < CA11 < (CG1+CG2) < 2.5.
$0.5 < CA 11 / CA 21 < 1.5$

CA11 means the effective diameter of the first surface S1 of the first lens 121 and 131, and CA21 means the effective diameter of the third surface S3 of the second lens 122 and 132. When equation 18 is satisfied, the optical system 100A can control the emitted light and set the factor affecting the aberration, and preferably, the following equation may satisfy: CA11 > CA21.
$1 < CA 22 / CA 31 < 3$

CA22 means the effective diameter of the fourth surface S4 of the second lens 122 and 132, and CA31 means the effective diameter of the fifth surface S5 of the third lens 123 and 133. When equation 19 is satisfied, the optical system 100A can control the light path to be emitted, and can set the light path to be convex toward the object of the second lens 122 and 132. Preferably, equation 19 may satisfy: 1.5 < CA22 / CA31 < 2.2.
$0.5 < CA 11 / DP_CA < 1.5$

DP_CA means the effective diameter of the diffuser. When equation 20 is satisfied, the optical system 100A can set the light path to be emitted to the diffuser 120 through the first lens 121. Equation 20 can preferably satisfy: 1 ≤ CA11 / DP_CA < 1.3.
$10 < CA 11 / CG 0$

CA11 means the effective diameter of the first surface S1 of the first lens 121 and 131, and CG0 is an optical axis distance between the first lens 121 and 131 and the aperture stop ST or diffuser 120. When the optical system 100A satisfies Equation 21, the effective diameter and curvature radius of the first lens 121 may be adjusted. In equation 21, the first embodiment satisfies: 15 < CA11 / CG0 < 35, and the second embodiment may satisfy: 50 < CA11 / CG0 < 100. Here, CGO may satisfy 0 ≤ CG0 < 3.5 mm.
$0 < CT 1 / CG 0$

When the optical system satisfies Equation 22, the optical axis distance CG0 between the first lens 121 and 131 and the aperture stop ST or diffuser 120 and the center thickness CT1 of the first lens 121 and 131 may be set, and the distortion aberration may be adjusted. Preferably, the first embodiment satisfies: 3 < CT1 / CG0 < 5, and the second embodiment satisfies: 5 < CT1 / CG0 < 15.

$1 < DP_CA / CA_Min < 4$

CA_Min means the smallest effective diameter among the lens surfaces of the lenses. When the optical system satisfies Equation 23, the entire optical axis length may be controlled. Preferably, the following equation may satisfy: 2 < ST_CA / CA_Max < 3.
$5 < CG_Max / CG 0$

CG_Max means the maximum center distance between lenses in the optical system, for example, the center distance between the second and third lenses. When the optical system satisfies equation 24, the maximum center distance between the lenses can set the relationship between the optical axis spacing between the first lens 121 and 131 and the aperture stop ST or diffuser 120, so that the entire optical axis length may be adjusted and the effective diameter increase of the first lens 121 and 131 may be suppressed. Preferably, the first embodiment satisfies: 5 < CG_Max / CG0 < 15, and the second embodiment satisfies: 20 < CG_Max / CG0 < 70.
$0 < CT 4 / BFL < 1.5$

BFL is an optical axis distance from the center of the light source-side surface of the last lens to the light source 126. That is, BFL is the optical axis distance from the center of the eighth surface S8 of the fourth lens 124 to the light source 126. When equation 25 is satisfied, the emitted light may be transmitted to the entire region of the third lens 103 by the fourth lens 124. Preferably, the following equation may satisfy: 0.3 < CT4 / BFL < 1.
$0.5 < CG 3 / CT 4 < 3$

CG3 means the center distance between the third and fourth lenses. When equation 26 is satisfied, the center distance between the third and fourth lenses may be made narrower than the center distance between the second and third lenses, and the effective diameter of the fourth lens 124 and 134 may be adjusted. Preferably, the first embodiment satisfies: 1 < CG3 / CT4 < 1.5, and the second embodiment may satisfy: 1.5 < CG3 / CT4 < 2.5.
$10 < DP_CA / CG 0$

If the transmission optical system satisfies Equation 27, the position of the diffuser 120 may be set, and due to the diffuser 120, the transmission optical system and the reception optical system may be optically matched even if they provide different aspect ratios. Preferably, the first embodiment satisfies: 20 < DP_CA / CG0 < 50, and the second embodiment may satisfy: 50 < DP_CA / CG0 < 100.
$2 < \left|L4R2\right| / CT 4 < 50$

L4R2 is the curvature radius of the light source-side surface of the fourth lens. When equation 28 is satisfied, the refractive power of the fourth lens 124 and 134 may be controlled and the optical performance may be improved. Preferably, the first embodiment may satisfy: 2 < |L4R2| / CT4 < 5, and the second embodiment may satisfy: 25 < |L4R2| / CT4 < 50.

$1 < \left|L4R2\right| / L 4 R 1 < 20$

L4R1 is the curvature radius of the object-side surface of the fourth lens. When equation 29 is satisfied, the refractive power of the fourth lens 124 and 134 may be controlled and the optical performance may be improved. Preferably, the first embodiment satisfies: 1 < L4R2 / L4R1 < 3, and the second embodiment may satisfy: 5 < L4R2 / L4R1 < 15.
$0 < L 1 R 1 / L 1 R 2 < 1$

L1R1 is the curvature radius of the object-side surface of the first lens, and L1R2 is the curvature radius of the light source-side surface of the first lens. If equation 30 is satisfied, the refractive power of the first lens 121 and 131 may be controlled to improve optical performance, and the distance between the first and second lenses may be reduced. Preferably, the following equation may satisfy: 0 < L1R1 / L1R2 < 0.5. If equation 30 is satisfied, the distance between the first lens 121 and 131 and the aperture stop ST or diffuser 120 may be set. In addition, the conditions may satsify: L1R1 > 0 and L1R2 > 0.
$0.2 < L 2 R 1 / L 2 R 2 < 1.5$

L2R1 is the curvature radius of the object-side surface of the second lens, and L2R2 is the curvature radius of the light source-side surface of the second lens. When equation 31 is satisfied, the refractive power of the second lens 122 and 132 may be controlled to improve the optical performance, and the incidence efficiency through the light source-side surface of the second lens 122 and 132 may be improved. Preferably, the following equations may satisfy: 0.3 < L2R1 / L2R2 < 0.8, and L2R1 > 0 and L2R2 > 0.
$10 < L 3 R 1 / L 3 R 2 < 30$

L3R1 is the curvature radius of the object side surface of the third lens, and L3R2 is the curvature radius of the light source-side surface of the third lens. If Equation 31-1 is satisfied, the refractive power of the third lens 123 and 133 may be controlled to improve the optical performance, and light may be refracted into the effective region of the second lens 122 and 132 through the object-side surface of the third lens 123 and 133. The curvature radius may satisfy: L3R1 > 0 and L3R2 > 0.
$0 < CT_Max / CG_Max < 1$

In Equation 32, the maximum center thickness CT_Max among the lenses and the maximum distance CG_Max between adjacent lenses may be set. If Equation 32 is satisfied, the optical system can have good optical performance at the focal length of the set field of view and can reduce the TTL. Preferably, the following equation may satisfy: 0.2 < CT_Max / CG_Max < 0.7.

$0.5 < ΣCT / ΣCG < 1.5$

ΣCT is the sum of the center thicknesses of the lenses, and ΣCG is the sum of the distances between adjacent lenses. If equation 33 is satisfied, the optical system can have good optical performance at the focal length at the set angle of view, and can reduce the TTL. Preferably, the following equation may satisfy: 0.5 < ΣCT / ΣCG < 1.
$5 < ΣNd < 15$

ΣNd means the sum of the refractive indices of each of the d-lines of the plurality of lenses. If equation 34 is satisfied, the TTL may be controlled in the optical system 100A in which the aspherical lens and the spherical material lens are mixed. In addition, if the number of spherical material lenses is greater than the number of aspherical material lenses, the sum of the TTL and the refractive indices may be set. Equation 34 preferably satisfies: 5 < ΣNd < 10.
$10 < ΣVd / ΣNd < 50$

ΣVd means the sum of the Abbe numbers of each of the plurality of lenses. If equation 35 is satisfied, the optical system 100A can have improved aberration characteristics and resolution. By setting the sum of the Abbe numbers and the sum of the refractive indices of the lenses in equation 35, the optical characteristics may be controlled, and preferably, the following equation may satisfy: 17 < ΣVd / ΣNd < 23.
$1 < \left(ΣCT*n\right) / F < 3$

F is the focal length of the optical system, and n is the number of lenses of the optical system. If equation 36 is satisfied, TTL may be controlled. Preferably, the following equation may satisfy: 1 < (ΣCT*n) / F < 2.
$3 < ΣCT / ΣET < 15$

ΣET is the sum of the edge thicknesses of the lenses. When equation 37 is satisfied, the optical system can have good optical performance at the focal length at the set field of view and can reduce the TTL. Equation 37 can preferably satisfy: 4 < ΣCT / ΣET < 10.
$1 < CA 11 / CA_Min < 5$

CA_Min means the minimum effective diameter among the object-side surfaces and the light source-side surfaces of the lenses. When equation 38 is satisfied, the optical system can control the incident light and provide a module with improved optical performance. Equation 38 can preferably satisfy: 2 < CA11 / CA_Min < 3. Here, CA32 may be the minimum effective diameter among the lens surfaces.
$1 < CA_Max / CA_Min < 5$

CA_Max means the maximum effective diameter among the object-side surfaces and the light source-side surfaces of the lenses. If equation 39 is satisfied, the optical system can improve its optical performance. Equation 39 can preferably satisfy: 2 < CA_Max / CA_Min < 3.
$0 < CG 2 / CA 12 < 1$

If equation 39 is satisfied, the incident light of the spherical lenses may be controlled. Equation 39 can preferably satisfy: 0.3 < CG2 / CA12 < 0.9.
$0.5 < CG 2 / CA 31 < 2$

If equation 40 is satisfied, the optical system can maintain the optical performance of the last spherical lens. Equation 40 preferably satisfies: 1 < CG2 / CA31 < 2.
$0 < CA_Max / F < 1$

F is the effective focal length of the optical system. If equation 41 is satisfied, the optical system can provide a narrow angle of view. Equation 41 preferably satisfies: 0.2 < CA_Max / F < 0.8.
$1 < CA_Max / \left(2*LsH\right) < 6$

LsH is 1/2 of the diagonal length of the light source. Equation 42 can set the maximum effective diameter CA_Max and the diagonal length of the light source, and if it satisfies this, the optical system can maintain good optical performance. Equation 42 can preferably satisfy: 2 < CA_Max / (2*LsH) < 4.
$1 < TD / CA_Max < 4$

TD is the optical axis distance from the center of the object-side surface of the first lens to the center of the light source-side surface of the last lens. If Equation 42-1 is satisfied, the total optical axis distance and the maximum effective diameter of the lenses may be set, and the size for good optical performance may be set. Equation 42-1 can preferably satisfy: 2 < TD / CA_Max < 3.
$0 < F / \left|L4R2\right| < 3$

F is the effective focal length of the optical system, and L4S2 is the curvature radius of the light source-side surface of the fourth lens. If equation 43 is satisfied, the effective focal length and the curvature radius of the light source-side surface of the aspherical lens may be set to control the TTL. In equation 43, the first embodiment may satisfy: 1 < F / |L4R2| < 3, and the second embodiment may satisfy: 0 < F / IL4R21 < 1.
$0 < F / L 1 R 1 < 2$

In equation 44, the effective focal length of the optical system and the curvature radius of the object-side surface of the first lens may be set to control the influence on the emitted light and the TTL. Equation 44 preferably satisfies: 1 ≤ F / L1R1 < 1.5.
$0 < EPD / \left|L4R2\right| < 0.5$

EPD means the size of the entrance pupil diameter of the optical system 100A. Here, the entrance pupil diameter may be defined as the exit pupil diameter in the case of the transmission optical system. When the transmission optical system 100A according to the embodiment satisfies equation 45, the optical system 100A can control the exit light. Preferably, the condition may satisfy: 0 < EPD / |L4R2| < 0.3. Preferably, the following equation may satisfy: L4R1 > 0, L4R2 < 0.
$0 < EPD / L 1 R 1 < 1$

In equation 46, the size of the entrance pupil diameter of the optical system 100A and the curvature radius of the object-side surface of the first lens may be set, and when these are satisfied, the optical system 100A can control the emitted light. Preferably, the following equation may satisfy: 0 < EPD / L1R1 < 0.8.

$0.5 < F 2 / F < 2$

F2 is the focal length of the second lens. When equation 47 is satisfied, a lens optical system with a small field of view may be provided. In addition, F2 > 0 may be satisfied. Preferably, the following equation may satisfy: 1 < F2 / F < 2.
$0.8 < F 1 / F < 2$

F1 is the focal length of the first lens. In equation 48, the focal length of the first lens and the effective focal length of the optical system may be set, and the refractive power of the first lens may be controlled. In addition, if equation 48 is satisfied, a lens optical system with a small field of view and a lens optical system with a small F number may be provided. In addition, F1 > 0 may be satisfied.
$0 < F 4 / F < 1$

In equation 49, the focal length F4 of the fourth lens may be set to control the refractive power of the fourth lens. If equation 49 is satisfied, a lens optical system in which the last lens adjacent to the light source has positive power and a small F number may be provided. Preferably, the following equation may satisfy: 0 < F4/F < 0.5. $\left|F3\right| < F 4$ (However, F3 < 0)

The balance of each focal length of each lens can suppress the difference in pint position due to temperature change. Accordingly, the optical characteristics of the lenses may be suppressed from being degraded due to temperature changes. In addition, the entire focal length of the transmission optical system may be greater than the entire focal length of the receiving optical system. $Po 2 * Po 3 < 0$

Po2 is the power value of the second lens, and Po3 is the power value of the third lens. That is, the powers of the second and third lenses have opposite signs, so that aberration may be improved, and light may be effectively guided by the spherical lens. When the condition may satisfy: Po2 * Po3 > 0, the improvement effect of chromatic aberration in the two lenses does not appear significantly. $60 mm < TTL < 200 mm$

In Equation 51, by setting TTL to be less than 200 mm, a vehicle optical system may be provided. Equation 51 may satisfy: 100 mm < TTL < 200 mm. In addition, the number of lenses in the transmission optical system may be smaller than the number of lenses in the receiving optical system. In addition, the number of aspherical lenses in the transmission optical system may be smaller than the number of aspherical lenses in the receiving optical system.
$5 mm < LsH < 16 mm$

LsH is 1/2 of the diagonal length of the light source. Equation 52 can set the diagonal length of the light source 126 and provide an optical system having a vehicle sensor size. Equation 52 can preferably satisfy: 7 mm < LsH < 13 mm.
$10 mm < BFL < 30 mm$

In Equation 53, the BFL (Back focal length) is set to be greater than 10 mm, thereby improving the assemblability of components and improving the joint reliability through the gap between the light source 126 and the last lens. Equation 53 can preferably satisfy: 15 mm < BFL < 25 mm. If the BFL is less than the range of equation 53, some of the light emitted from the light source may not be emitted, which may be a cause of resolution degradation. If the BFL exceeds the range of equation 53, stray light may be emitted, which may deteriorate the aberration characteristics of the optical system.
$50 mm < F < 300 mm$

Equation 54 can set the total focal length F to suit the vehicle transmission optical system. Equation 54 may satisfy: 100 mm < F < 200 mm, and may be greater than the total focal length of the receiving optical system.
$1 degree < FOV < 30 degrees$

In equation 55, FOV (Field of view) means the angle (Degree) of view of the optical system 100A, and can provide a vehicle optical system having an FOV of less than 30 degrees. Preferably, the following equation may satisfy: 5 ≤ FOV ≤ 15. The field of view of the transmission optical system may be provided narrower than the field of view of the receiving optical system. That is, even if the angle of view of the receiving optical system is implemented wide by the diffuser 120, the sensitivity of the detection portion may be prevented from being degraded. In addition, the following condition may satisfy: 1 ≤ RsH/F0V < 1.5.

In equation 55, the range of the vehicle transmission optical system may be set by the field of view. When equation 55 is satisfied, the change rate of the effective focal length and the change rate of the field of view may be set low when the temperature changes from room temperature to high temperature. In addition, even if an aspherical lens is mixed with a spherical lens and used in the optical system 100A, the deterioration of the optical characteristics may be prevented through temperature compensation and aberration correction by the aspherical lens made of glass.

$1 < TTL / CA_Max < 4$

In equation 56, CA_Max means the largest effective diameter (mm) among the object-side surfaces and the light source-side surfaces of the plurality of lenses. Equation 56 sets the relationship between the total optical axis length of the optical system and the maximum effective diameter, so that the size of the vehicle optical system may be adjusted. Equation 56 can preferably satisfy: 1.3 < TTL / CA_Max < 2.3.
$5 < TTL / LsH < 20$

Equation 57 can set the total optical axis length (TTL) of the optical system and the diagonal length LsH from the optical axis of the light source 126. When the optical system 100A according to the embodiment satisfies equation 57, the optical system 100A can have TTL for application of the vehicle light source 126. Equation 57 can preferably satisfy: 8 < TTL / LsH < 15.
$0 < BFL / LsH < 3$

Equation 58 can set the optical axis interval between the light source 126 and the last lens and the diagonal length from the optical axis of the light source 126. When the optical system 100A according to the embodiment satisfies equation 58, the optical system 100A can secure BFL for applying the size of the vehicle light source 126, set the interval between the last lens and the light source 126, and have good optical characteristics in a narrow FOV. Equation 58 can preferably satisfy: 1.5 < BFL / LsH < 2.5.
$1 < TTL / BFL < 15$

Equation 59 can set the total optical axis length (TTL) of the optical system and the optical axis distance BFL between the light source 126 and the last lens. When the optical system 100A according to the embodiment satisfies equation 59, the optical system 100A can secure BFL. Equation 59 can preferably satisfy: 3 < TTL / BFL < 10.
$0.5 < TTL / F < 2$

Equation 60 can set the total focal length F and the total optical axis length (TTL) of the optical system 100A. Accordingly, an optical system for a driver assistance system may be provided. Equation 60 can preferably satisfy: 1 ≤ TTL/F < 1.5. When the optical system 100A according to the embodiment satisfies the equation 60, the optical system 100A can have an appropriate focal length in the set TTL range, and can provide an optical system that can maintain an appropriate focal length and form an image even when the temperature changes from low temperature to high temperature. When it is less than the lower limit of the equation 60, it is necessary to increase the refractive power of the lenses, so that correction of spherical aberration or distortion aberration becomes difficult, and when it exceeds the upper limit of the equation 60, the effective diameter or TTL of the lenses becomes longer, so that the problem of the optical system becoming larger may occur.

$3 < F / BFL < 10$

Equation 61 can set the total focal length F of the optical system 100A and the optical axis distance BFL between the light source 126 and the last lens. When the optical system 100A according to the embodiment satisfies the equation 61, the optical system 100A can have a set field of view and an appropriate focal length, and can provide a vehicle optical system. In addition, the optical system 100A can minimize the distance between the last lens and the light source 126, so that it can have good optical characteristics in the FOV. The equation 61 can preferably satisfy: 5 < F / BFL < 10.
$5 < F / LsH < 20$

The equation 62 can set the total focal length F of the optical system 100A and the diagonal length LsH from the optical axis of the light source 126. This optical system 100A can have improved aberration characteristics in the size of the vehicle light source 126. Equation 62 can preferably satisfy: 8 < F / LsH < 15.
$1 < F / EPD < 18$

Equation 63 can set the total focal length F and the entrance pupil diameter of the optical system 100A. Accordingly, the overall brightness of the optical system may be controlled. That is, an optical system having a small F number may be provided. In equation 63, the first embodiment may satisfy: 5 < F / EPD < 15, and the second embodiment may satisfy: 1 < F / EPD < 3.
$0 < EPD / LsH / FOV < 1$

Equation 64 can set the relationship between the entrance pupil diameter (EPD), the length LsH of 1/2 of the diagonal length of the light source, and the field of view. Accordingly, the overall size and brightness of the optical system may be controlled. Equation 64 preferably satisfies 0.05 < EPD/LsH/FOV < 0.9.
$0 < FOV / F # < 7$

Equation 65 can set the relationship between the angle of view and the F number (F#) of the optical system. In Equation 65, the first embodiment satisfies: 0 < FOV / F# < 1, and the second embodiment satisfies: 2 < FOV / F# < 7.
$5 < \left(CT_Max+CG_Max\right) / n < 20$
$200 < \left(FOV*TTL\right) / n < 500$

Preferably, Equation 67 may satisfy the condition of 250 < (FOV*TTL)/n < 400 depending on the field of view and the number of lenses (n).
$FOV < \left(TTL/n\right)$
$1 < \left(TD/CA_Max\right) * n < 10$

Preferably, the following equation may satisfy: 3 < (TD/CA_Max)*n < 8.
$50 < TTL / Nd 1 < 100$

In equations 66 to 70, n is the total number of lenses, and the relationship between the maximum center thickness CT_Max of the lenses, the maximum center distance CG_Max, FOV, TTL, the optical axis distance TD of the lenses, and the refractive index Nd1 of the first lens may be set according to the total number of lenses. Accordingly, the chromatic aberration, resolution, size, etc. of the optical system having 5 or fewer lenses may be controlled.

$Z = \frac{{cY}^{2}}{1 + \sqrt{1 - \left(1+K\right) {c}^{2} {Y}^{2}}} + A {Y}^{4} + B {Y}^{6} + C {Y}^{8} + {DY}^{10} + {EY}^{12} + F {Y}^{14} + ⋯$

In the equation 71, Z may mean a distance in the direction of the optical axis from an arbitrary position on the aspherical surface to the vertex of the aspherical surface. The Y may mean a distance in the direction perpendicular to the optical axis from an arbitrary position on the aspherical surface to the optical axis. The c may mean the curvature of the lens, and K may mean the conic constant. In addition, A, B, C, D, E, and F may mean aspheric coefficients.

The optical system 100A according to the embodiment may satisfy at least one or two or more equations among equations 1 to 70. In this case, the optical system 100A may have improved optical characteristics. In detail, when the optical system 100A satisfies at least one of equations 1 to 35 and/or at least one of equations 36 to 70, the optical system 100A may have improved resolution and may improve aberration and distortion characteristics. In addition, the optical system 100A can secure a BFL (Back focal length) for applying a vehicle light source 126, compensate for the deterioration of optical characteristics due to temperature change, and minimize the distance between the last lens and the light source 126, so that it can have good optical performance within the FOV.

Table 1 shows the items of the equations described above in the optical system 100A of the embodiment, including the TTL (mm), BFL (mm), effective focal length F, LsH, effective diameter CA, sum of the center thicknesses of each lens, sum of the center distances between adjacent lenses, sum of Abbe numbers, sum of refractive indices, TD (mm), which is the optical axis distance from the first surface S1 to the eighth surface S8, FOV, edge thickness ET, F number, etc. of the optical system 100A.

**[Table 1]**

| Items | First embodiment | Second embodiment | Items | First embodiment | Second embodiment |
|---|---|---|---|---|---|
| F | 148.701 | 155.651 | ET1 | 6.280 | 6.279 |
| ΣNd | 7.030 | 7.298 | ET2 | 6.280 | 14.359 |
| ΣVd | 142.371 | 159.022 | ET3 | 11.479 | 17.902 |
| ΣCT | 60.244 | 51.899 | ET4 | 6.280 | 6.287 |
| ΣCG | 60.728 | 73.244 | FOV | 9.016 | 9.015 |
| ΣET | 7.580 | 11.207 | EPD | 12.461 | 86.473 |
| TTL | 143.700 | 146.701 | BFL | 22.728 | 21.558 |
| F-number | 11.934 | 1.800 | TD | 126.972 | 128.143 |
| SD | 146.700 | 40.1700 | LsH | 11.740 | 11.731 |

Table 2 shows the result values for the equations 1 to 35 described above in the optical system 100A of the embodiment. Referring to Table 2, it may be seen that the optical system 100A satisfies at least one, two or more, or three or more of the equations 1 to 35. Accordingly, the optical system 100A can have good optical performance within the FOV and can have excellent optical characteristics.

**[Table 2]**

| Equations | | First embodiment | Second embodiment |
|---|---|---|---|
| 1 | 0 < CT1 / CT2 < 1 | 0.547 | 0.608 |
| 2 | 0.5 < CT4 / CT3 < 7 | 4.561 | 1.036 |
| 3 | 1 < CT2 / CT3 < 7 | 4.426 | 1.776 |
| 4 | 1 < CG2 / CT2 < 4 | 1.760 | 2.669 |
| 5 | 1 < CG2 / (CT3+CT4) < 4 | 1.401 | 2.327 |
| 6 | 50 < CG2 / CG1 < 200 | 126.062 | 167.579 |
| 7 | 1 < CG2 / CG3 < 4 | 1.673 | 2.218 |
| 8 | 1 < CG2 / (CT1+CG1+CT2) < 3 | 1.127 | 1.643 |
| 9 | TTL < SD | Satisfaction | Satisfaction |
| 10 | 1.70 < Nd1 | 1.798 | 1.821 |
| 11 | 0.5 < Nd1/Nd3 <1.5 | 0.986 | 1.073 |
| 12 | 0.5 < Nd1/Nd4 <1.5 | 1.117 | 1.000 |
| 13 | (Vd2*Nd2) < (Vd4*Nd4) | Satisfaction | Satisfaction |
| 14 | TD < SD | Satisfaction | Satisfaction |
| 15 | 1 < CA42 / CT4 < 5 | 1.697 | 3.387 |
| 16 | SA42 < CG2 < CA11 | Satisfaction | Satisfaction |
| 17 | 1 < CA11 / (CG1+CG2) < 3 | 2.061 | 1.640 |
| 18 | 0.5 < CA11 / CA21 < 1.5 | 1.062 | 1.049 |
| 19 | 1 < CA22 / CA31 < 3 | 1.809 | 1.841 |
| 20 | 0.5 < CA11 / DP_CA < 1.5 | 1.016 | 1.008 |
| 21 | 10 < CA11/CG0 | 26.623 | 83.597 |
| 22 | 0 < CT1 / CG0 | 3.920 | 11.460 |
| 23 | 1 < DP_CA / CA_Min < 4 | 2.545 | 2.635 |
| 24 | 5 < CG_Max / CG0 | 12.606 | 50.274 |
| 25 | 0 < CT4 / BFL < 1.5 | 0.974 | 0.510 |
| 26 | 0.5 < CG3 / CT4 < 3 | 1.021 | 2.062 |
| 27 | 10 < DP_CA / CG0 | 26.192 | 82.925 |
| 28 | 2 < \|L4R2\| / CT4 < 50 | 3.633 | 38.781 |
| 29 | 1 < \|L4R2\| / L4R1 < 20 | 1.717 | 9.513 |
| 30 | 0 < L1R1/L1R2 < 1 | 0.212 | 0.133 |
| 31 | 0.2 < L2R1 / L2R2 < 1.5 | 0.589 | 0.677 |
| 32 | 0 < CT_Max / CG_Max < 1 | 0.585 | 0.375 |
| 33 | 0.5 < ∑CT / ∑CG < 1.5 | 0.992 | 0.709 |
| 34 | 5 < ∑Nd <15 | 7.030 | 7.298 |
| 35 | 10 < ∑Vd / ∑Nd <50 | 20.251 | 21.788 |

Table 3 shows the result values for the equations 36 to 70 described above in the optical system 100A of the embodiment. Referring to Table 3, it may be seen that the optical system 100A satisfies at least one, two or more, or three or more of the equations 36 to 70. Accordingly, the optical system 100A can have good optical performance within the FOV and can have excellent optical characteristics.

**[Table 3]**

| Equations | | First embodiment | Second embodiment |
|---|---|---|---|
| 36 | 1 < (∑CT*n) /F < 3 | 1.621 | 1.334 |
| 37 | 3 < ΣCT / ΣET < 15 | 7.948 | 4.631 |
| 38 | 1 < CA11 / CA_Min < 5 | 2.587 | 2.657 |
| 39 | 0 < CG2 / CA12 < 1 | 0.482 | 0.609 |
| 40 | 0.5 < CG2 / CA31 < 2 | 1.062 | 1.311 |
| 41 | 0 < CA_Max / F < 1 | 0.537 | 0.537 |
| 42 | 1 < CA_Max / (2*LsH) < 6 | 3.402 | 3.563 |
| 43 | 0 < F / \|L4R2\| < 3 | 1.849 | 0.365 |
| 44 | 0 < F / L1R1 < 2 | 1.298 | 1.090 |
| 45 | 0 < EPD / \|L4R2\|< 0.5 | 0.155 | 0.203 |
| 46 | 0 < EPD / L1R1 < 1 | 0.109 | 0.605 |
| 47 | 0.5 < F2 / F < 2 | 1.152 | 1.403 |
| 48 | 0.8 < F1 / F < 2 | 1.242 | 1.310 |
| 49 | 0 < F4 / F < 1 | 0.349 | 0.328 |
| 50 | Po2 * Po3 < 0 | Satisfaction | Satisfaction |
| 51 | 60 < TTL < 200 | 143.700 | 146.701 |
| 52 | 5 < LsH < 16 | 11.740 | 11.731 |
| 53 | 10 < BFL < 30 | 22.728 | 21.558 |
| 54 | 50 < F < 300 | 148.701 | 155.651 |
| 55 | 1 < FOV < 30 | 9.016 | 9.015 |
| 56 | 1 < TTL / CA_Max < 4 | 1.799 | 1.755 |
| 57 | 5 < TTL / LsH < 20 | 12.240 | 12.506 |
| 58 | 0 < BFL / LsH < 3 | 1.936 | 1.838 |
| 59 | 1 < TTL / BFL < 15 | 6.323 | 6.805 |
| 60 | 0.5 < F / TTL < 2 | 1.035 | 1.061 |
| 61 | 3 < F / BFL < 10 | 6.543 | 7.220 |
| 62 | 5 < F / LsH < 20 | 12.666 | 13.269 |
| 63 | 3 < F / EPD < 18 | 11.934 | 1.800 |
| 64 | 0 < EPD/LsH/FOV < 1 | 0.118 | 0.818 |
| 65 | 0 < FOV / F# <7 | 0.756 | 5.008 |
| 66 | 5 < (CT_Max+CG_Max)/n < 20 | 14.990 | 17.278 |
| 67 | 200 < (FOV*TTL)/n < 500 | 323.912 | 330.631 |
| 68 | FOV < (TTL/n) | Satisfaction | Satisfaction |
| 69 | 1 < (TD / CA_Max) *n < 10 | 6.359 | 6.131 |
| 70 | 50 < TTL / Nd1 < 100 | 79.918 | 80.547 |

FIG. 10 is a block diagram of a sensor system having a transmission optical system according to an embodiment of the invention. Referring to FIG. 10, the sensor device includes a control portion 10, a light source driving portion 20, a transmission optical system 30, a receiving optical system 50 disclosed above, and a signal processing portion 60. The control portion 10 controls the transmission and reception of signals, and may be linked to devices related to communication services such as autonomous driving modules, artificial intelligence modules, drones, robots, augmented reality devices, virtual reality devices, and 5G and 6G based on the transmitted/received signals. The light source driving portion 20 supplies power to a light source included in the transmission optical system 30 to drive it. The light source generates laser light in the form of a linear light source or a point light source. The light source driving portion 20 can adjust or vary the driving current supplied to the light source according to driving environment information. The driving environment information can include terrain information of a driving section, traffic congestion information, weather, etc.

The wavelength of the laser light generated from the light source may be in the range of 800 nm to 1000 nm, for example, in the range of 890 nm to 960 nm or in the range of 940 nm ±10 nm. The laser light source may be implemented as a semiconductor diode laser based on a compound semiconductor, for example, an InGaAs/GaAs, and may emit high power laser light. The light source may include a single emitter and/or multiple emitters.

The transmission optical system 30 transmits the laser light generated from the light source to an object 40, and the light reflected from the object 40 is received by the receiving optical system 50. The receiving optical system 50 may be composed of a plurality of optical sensors, and the optical sensor converts the received light into an electrical signal using a photodiode. That is, the image sensors are arranged in a matrix type to convert the light received from the object scanned in each of the horizontal and vertical directions into current.

The signal processing portion 60 converts the output of the receiving optical system 50 into voltage, amplifies it, and then converts the amplified signal into a digital signal using an analog-to-digital converter. The signal processing portion 60 analyzes the digital data using a TOF (Time of Flight) algorithm or a phase-shift algorithm to detect the distance to the object 40 and the shape of the object.

The control portion 10 can receive the vehicle speed information and road condition information through a control unit (ECU) or a network. The control portion 10 can receive the driving environment information through a network. The driving environment information can include terrain information of the driving section, traffic congestion information, weather, etc. The control portion 10 can adjust the gain based on one or more of the vehicle speed, the road condition of the road on which the vehicle is driving, and the driving environment information, and can provide the sensor data including the distance to the object and the shape information of the object to the free driving device.

FIG. 11 is a drawing showing a receiving optical system according to an embodiment of the invention.

Referring to FIG. 11, the receiving optical system 100 may include fifth to ninth lenses 101, 102, 103, 104, and 105 sequentially arranged from the object side to the image sensor 151. The fifth to ninth lenses 101, 102, 103, 104, and 105 may have shapes that are asymmetrical with respect to the object side and different lens counts from the first to fourth lenses 121, 122, 123, and 124 of the transmission optical system 100A of FIG. 1.

The first to third lenses 121, 122, and 123 and the fifth, seventh, and eighth lenses 101, 103, and 104 are made of glass and are spherical lenses that are not injection molded. In addition, the fourth lens 124 and the sixth and ninth lenses 102 and 105 are made of glass and are injectionmolded aspherical lenses. The aperture stop ST arranged between the seventh and eighth lenses 103 and 104 may be arranged on the object side of the optical filter 115. The aperture stop of the transmission optical system 100A may be defined as the second aperture stop, and the aperture stop of the receiving optical system 100 may be defined as the first aperture stop.

The fifth lens 101 may have positive (+) or negative (-) refractive power on the optical axis OA. The fifth lens 101 may have negative (-) refractive power. The fifth lens 101 made of glass may reduce changes in the center position and curvature radius due to temperature changes in the surrounding environment, and may protect the incident side surface of the receiving optical system 100.

The object-side surface of the fifth lens 101 based on the optical axis may be convex, and the sensor-side surface may be concave. The object-side surface and the sensor-side surface of the fifth lens 101 may have spherical surfaces. The fifth lens 101 may have a meniscus shape that is convex toward the object side. The object-side surface of the fifth lens 101 may have the largest curvature radius among the first to ninth lenses. The sixth lens 102 may be arranged between the fifth lens 101 and the seventh lens 103. The sixth lens 102 may have positive (+) or negative (-) refractive power on the optical axis OA. The sixth lens 102 may have negative (-) refractive power. The sixth lens 102 may include a plastic or glass material, and may be provided as an aspherical surface of a glass material, for example. The object-side surface of the sixth lens 102 based on the optical axis OA may be concave, and the sensor-side surface may be concave.

The seventh lens 103 may have positive (+) or negative (-) refractive power on the optical axis OA. The seventh lens 103 may have positive (+) refractive power. The seventh lens 103 may include a plastic or glass material, and may be, for example, a glass material. The object-side surface of the seventh lens 103 based on the optical axis may be convex, and the sensor-side surface may be convex. The seventh lens 103 may have a shape in which both sides are convex on the optical axis OA. At least one or both of the object-side surface and the light source-side surface of the seventh lens 103 may be spherical. The aperture stop ST may be arranged on the periphery of the sensor-side surface of the eighth lens 103. The seventh lens 103 adjacent to the object side of the above aperture stop ST may have positive refractive power, thereby suppressing an increase in the effective diameter of the eighth lens 104. The eighth lens 104 may have positive (+) or negative (-) refractive power on the optical axis OA. The eighth lens 104 may have positive (+) refractive power. The eighth lens 104 may include a plastic or glass material, and may be provided as a glass material. The eighth lens 104 may be a spherical lens. The object-side surface of the eighth lens 104 with respect to the optical axis may be convex, and the sensor-side surface may be convex.

The ninth lens 105 may have positive (+) or negative (-) refractive power on the optical axis OA. The ninth lens 105 may have positive (+) refractive power. The ninth lens 105 may include a plastic or glass material, and may be provided as an aspherical surface of a glass material. The ninth lens 105 may be injection molded. The object-side surface of the ninth lens 105 with respect to the optical axis may be convex, and the sensor-side surface may be convex. The ninth lens 105 may be the lens closest to the image sensor 151. The ninth lens 105 may have a lower refractive index than the refractive indices of the fifth and seventh lenses 101 and 103.

At least two lenses may be arranged between the optical filter 155 and the image sensor 151. For example, the eighth and ninth lenses 104 and 105 may be arranged between the optical filter 155 and the image sensor 151. An aspherical lens and a spherical lens may be mixed between the optical filter 155 and the image sensor 151. The optical filter 155 may be disposed between the spherical seventh lens 103 and the spherical eighth lens 108. The optical filter 155 may be disposed between the sensor-side surface of the seventh lens 103 and the object-side surface of the eighth lens 104. The optical filter 155 may be a band pass filter that passes a laser beam in the range of 800 nm to 1000 nm, for example, in the range of 890 nm to 960 nm or 940 nm ±10 nm. The optical filter 155 may pass light having a wavelength corresponding to a laser beam transmitted from a transmission optical system of a LIDAR device and block light corresponding to the remaining ambient light.

The cover glass 153 is arranged between the ninth lens 105 and the image sensor 151, and protects the upper portion of the image sensor 151 and can prevent the reliability of the image sensor 151 from being deteriorated. The cover glass 153 may be removed. The cover glass 153 may be a protective glass. The image sensor 151 can detect light that has sequentially passed through the lenses. The image sensor 151 may include an element capable of detecting incident light, such as a CCD (Charge coupled device) or a CMOS (Complementary metal oxide semiconductor). The light-emitting area of the light source 126 may be different from the lightreceiving region of the image sensor 151. The ninth lens 105 may be an aspherical lens that is closest to the image sensor 151. Two or more aspherical lenses may be placed within the receiving optical system 100.

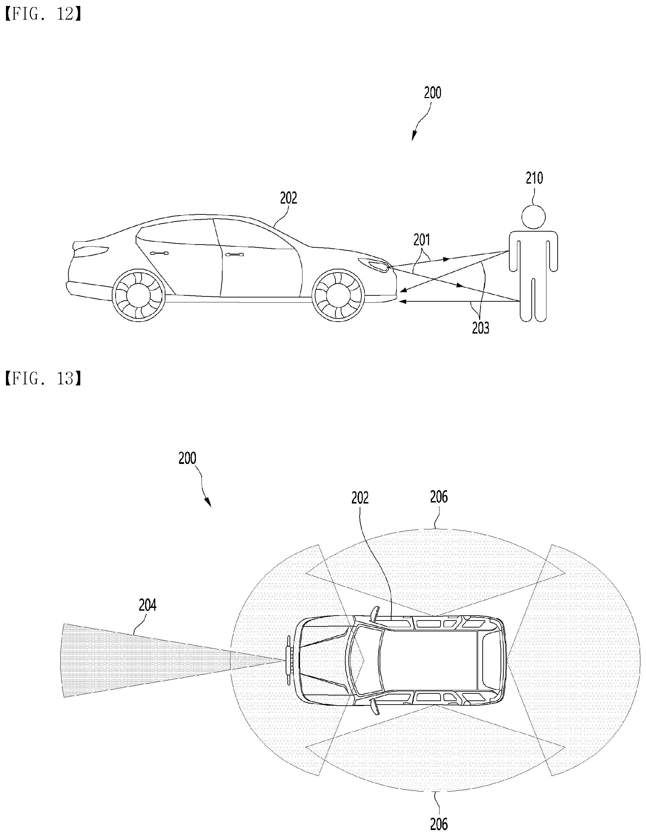

FIG. 12 is a drawing showing an example of measuring an object in a vehicle having a sensor system of the invention, and FIG. 13 is a drawing showing an example of surrounding surveillance in a vehicle having a sensor system of the invention.

Referring to FIGS. 12 and 13, a vehicle 202 having a sensor system includes a transmitting optical system that projects a laser beam 201 generated by a light source toward a target scene, and a receiving optical system that receives light 203 reflected from the target or subject 210. In addition, the sensor system includes a LIDAR system, which typically includes a controller that calculates distance information to the subject 210 from the reflected light, and a device that can scan or provide a specific pattern of light, which may be a static pattern within a desired range and FOV. The transmitting and receiving optical systems are used to convert the received signal light into a measurement value representing a point-by-point three-dimensional map of the surrounding environment within the range and FOV of the LIDAR system.

The receiving optical system and signal processing portion for the LIDAR calculate range information based on the time-of-flight measurements of the light pulses emitted from the light source. In addition, the target plane associated with the specific range is illuminated in the scene, and the known information about the light beam profile based on the specific design of the source and projector system is used to determine position information about the reflecting surface, thereby generating a complete x, y, z, or 3D picture of the scene. In other words, the point-by-point 3D map of the surrounding environment represents a collection of measurement data representing position information from all surfaces reflecting the light from the source to the receiver within the field of view of the LIDAR system. In this way, a 3D representation of the object in the field of view of the LIDAR system is obtained.

Also illustrated is a schematic diagram showing the 2D field of view and range requirements of a typical surround sensing LIDAR system 200 for a vehicle 202. For example, an adaptive cruise control function may require a field of view and range 204 with a narrow field of view compared to a "surround view" field of view and range 206, but with a long field range requirement. In general, the sensor capabilities of an automobile may be enabled by a combination of LIDAR, radar, cameras, and ultrasonic sensors. The combination of these sensor data to generate information about the surrounding environment is often referred to as "sensor fusion." While the present invention describes a LIDAR system in the context of an automobile, where LIDAR is widely used for autonomous or self-driving or driver-assisted vehicles, it should be understood that the embodiments may be applied to any vehicle. Other types of vehicles may include robots, tractors, trucks, airplanes, drones, boats, ships, etc.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention. Although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And the differences related to these modifications and applications should be construed as being included in the scope of the invention as defined in the appended claims.

## Claims

1. An optical system comprising:
first to fourth lenses arranged in order along an optical axis from an object toward a light source side,
wherein the first lens has a shape in which an object-side surface is convex on the optical axis and has positive power,
wherein the second lens has a convex meniscus shape on the optical axis toward the object,
wherein the third lens has negative power,
wherein the fourth lens has positive power,
wherein a center distance between the second and third lenses is the maximum among center distances between adjacent two lenses, and
wherein a light source-side surface of the third lens has a concave shape on the optical axis, and is the minimum among absolute values of curvature radii of object-side surfaces and light source-side surfaces of the first to fourth lenses.

2. The optical system of claim 1,
wherein an effective diameter of the third lens is the minimum among effective diameters of the first to fourth lenses.

3. The optical system of claim 1,
wherein the object-side surface of the third lens has a convex shape on the optical axis.

4. The optical system of any one of claims 1 to 3,
wherein the fourth lens has a convex shape on both sides on the optical axis.

5. The optical system of any one of claims 1 to 3,
wherein a center distance between the first lens and the second lens is the smallest among the center distances between adjacent lenses and is less than 1 mm.

6. The optical system of any one of claims 1 to 3, comprising:
a diffuser arranged on an object side of the first lens; and a light source arranged on a light source side of the fourth lens.

7. The optical system of any one of claims 1 to 3,
wherein the first to fourth lenses are made of glass,
wherein the fourth lens has an aspherical shape.

8. The optical system of any one of claims 1 to 3,
wherein a field of view is FOV,
wherein an optical axis distance from the object-side surface of the first lens to a surface of the light source is TTL,
wherein the following equation satisfies: FOV < (TTL/n)
wherein n is the number of lenses.

9. The optical system of any one of claims 1 to 3,
wherein an optical axis distance from the object-side surface of the first lens to a surface of the light source is TTL,
wherein a refractive index of the first lens is Nd1,
wherein the following equation satisfies: 50 < TTL / Nd1 < 100.

10. The optical system of any one of claims 1 to 3,
wherein the maximum effective diameter of the object-side surface and the light source-side surface of the first to fourth lenses is CA_Max,
wherein a total focal length is F,
wherein the following equation satisfies: 0 < CA_Max/F < 1.

11. The optical system of claim 10,
wherein the effective diameter of the first lens is the largest among the effective diameters of the first to fourth lenses.

12. A transmission optical system comprising:
a diffuser adjacent to an object;
a light source that irradiates laser light; and
first to fourth lenses sequentially arranged along an optical axis between the diffuser and the light source,
wherein the first lens has a meniscus shape convex toward the object,
wherein the third lens has negative power,
wherein the fourth lens has a biconvex shape on the optical axis,
wherein each of the first and second lenses has an effective diameter larger than effective diameters of each of the third and fourth lenses,
wherein a center thickness of the first lens is CT1,
wherein a center thickness of the second lens is CT2,
wherein a center distance between the first and second lenses is CG1,
wherein a center distance between the second and third lenses is CG2,
wherein the following equation satisfies: 1 < CG2 / (CT1+CG1+CT2) < 3.

13. The transmission optical system of claim 12,
wherein a center thickness of the third lens is CT3,
wherein a center thickness of the fourth lens is CT4,
wherein the following equation satisfies: 1 < CG2 / (CT3+CT4) < 4.

14. The transmission optical system of claim 12 or 13,
wherein the maximum of the center thicknesses of each of the first to fourth lenses is CT_Max,
wherein the maximum of center distances between the first to fourth lenses is CG_Max,
wherein the following equation satisfies: 0.2 < CT_Max / CG_Max < 0.7,
wherein the first to fourth lenses are made of glass,
wherein the first to third lenses have a spherical shape,
wherein the fourth lens has positive power and an aspherical shape.

15. A LIDAR device comprising:
a transmission optical system having a light source and first to fourth lenses aligned with a first optical axis from an object toward the light source; and
a receiving optical system having an image sensor and fifth to ninth lenses aligned with a second optical axis from the object toward the image sensor,
wherein at least one lens of the first to fourth lenses adjacent to the light source is an aspherical lens,
wherein at least two of the fifth to ninth lenses are aspherical lenses,
wherein the receiving optical system includes an optical filter arranged between the spherical lenses,
wherein a number of aspherical lenses in the transmission optical system is smaller than a number of spherical lenses,
wherein a field of view of the transmission optical system is 15 degrees or less,
wherein a distance from an object-side surface of the first lens in the transmission optical system to the light source is more than 60 mm and less than 200 mm,
wherein a focal length in the transmission optical system is more than 50 mm and less than 300 mm, and
wherein the first to fourth lenses and the fifth to ninth lenses are all made of glass.
